# EUROPÄISCHE PATENTANMELDUNG

(11) **EP 2 520 521 A1**
(43) Veröffentlichungstag der Anmeldung: **07.11.2012**
(21) Anmeldenummer: 12165251.5
(22) Anmeldetag: 24.04.2012
(51) Int. Cl.: B65G 47/68, B65G 47/53, B65G 47/22

(54) **Verfahren und Vorrichtung zur Umlenkung und Ausrichtung von Stückgütern oder Artikeln**

(30) Priorität: 06.05.2011 DE 102011050185
(71) Anmelder: Krones AG, 93073 Neutraubling (DE)
(72) Erfinder: Eschlbeck, Richard, 83569 Vogtareuth (DE)
(74) Vertreter: Benninger, Johannes

(57) **Zusammenfassung**

Die Erfindung betrifft eine Vorrichtung (10) und ein Verfahren zur Umlenkung und Ausrichtung von Stückgütern, Artikeln (14) und/oder Gruppen von Artikeln (14) oder Stückgütern, die in wenigstens zwei ungefähr parallelen Längsreihen (16) von annähernd lückenlos oder voneinander beabstandeten Stückgütern oder Artikeln (14) in einer ersten Förderrichtung (18) zu einer Übergabe- und Ausrichteinheit (22) bewegt werden, von der aus sie in ausgerichteter Anordnung in eine zur ersten Förderrichtung (18) ungefähr senkrechte zweite Förderrichtung (42) weiterbewegt werden. Die Übergabe- und Ausrichteinheit (22) ist zur Übergabe und Ausrichtung einer vordersten Querreihe der in wenigstens zwei Längsreihen (16) nebeneinander in die erste Förderrichtung (18) bewegten Stückgüter oder Artikel (14) mit einer in oder gegen die erste Förderrichtung (18) beweglichen Anschlageinrichtung (30) gekoppelt, die bei einer Überführung der vordersten Querreihe von Artikeln (14) oder Stückgüter auf die Übergabe- und Ausrichteinheit (22) in eine zur vorder- oder rückseitig bündigen Ausrichtung der vordersten Querreihe von Artikeln (14) oder Stückgütern entsprechende Profilierung oder Positionierung gebracht wird. Die Übergabe- und Ausrichteinheit (22) wird durch Verschiebung parallel zur ersten Förderrichtung (18) in eine definierte, fluchtende Ausrichtung zur zweiten Förderrichtung (42) gebracht. Die links- oder rechtsbündig ausgerichtete Artikel- oder Stückgutreihe von wenigstens zwei hintereinander angeordneten Artikeln (14) oder Stückgütern wird anschließend in die zweite Förderrichtung (42) weiterbewegt.

## Beschreibung

Die vorliegende Erfindung betrifft ein Verfahren zur Umlenkung und Ausrichtung von Stückgütern, Artikeln und/oder Gruppen von Artikeln oder Stückgütern mit den Merkmalen des unabhängigen Verfahrensanspruchs 1. Die Erfindung betrifft weiterhin eine Vorrichtung zur Förderung, zur Umlenkung und Ausrichtung von Stückgütern, Artikeln und/oder Gruppen von Artikeln oder Stückgütern mit den Merkmalen des unabhängigen Anspruchs 9.

Bei der Handhabung und Förderung sowie generell beim Transport von Stückgütern wie Paketen, Gebinden o. dgl. ist es an manchen Stellen erforderlich, dem Transportweg der Stückgüter eine neue Richtung zu geben, bspw. durch eine Umlenkung um einen definierten Winkel. Eine solche Umlenkung kann gleichzeitig dazu genutzt werden, die Stückgüter neu auszurichten.

Verfahren, bei welchen Stückgüter in eine vorgegebene Formatierung gebracht und ausgerichtet werden, sind bereits aus dem Stand der Technik bekannt. So offenbart bspw. die DE 32 19 015 A1 eine Vorrichtung zum Beladen von Paletten. Die Vorrichtung umfasst eine Zuführbahn für Stückgüter sowie ein Tragelement, welches nach Aufnahme der Stückgüter über die Paletten verfährt und sie dort nach Abstützen durch einen verfahrbaren Gegenhalter absetzt, indem es sich gegenüber diesem zurückzieht. Diese bekannte Vorrichtung ermöglicht eine definierte Platzierung von Stückgütern auf Paletten, nicht jedoch den Weitertransport von Behältern nach Umlenkung bei gleichzeitiger Ausrichtung.

Für manche Anwendungsfälle ist es jedoch wünschenswert, eine Umlenkung von Artikeln, Behältern oder Stückgütern entlang einer Transportstrecke mit einer einseitigen Ausrichtung zu kombinieren, so dass die in einer anderen Richtung weitertransportierten Güter nach ihrem Richtungswechsel einseitig bündig ausgerichtet sind, was wichtig für nachfolgende Transport- und/oder Handhabungsprozesse sein kann.

Ein solcher Wunsch nach Ausrichtung der umzulenkenden Transportgüter kann insbesondere bei der Auflösung von Palettenlagen entstehen, bei denen die quaderförmigen Transportgüter nicht allesamt in derselben Orientierung abgelegt und/oder gestapelt sind, so dass nach der Übergabe an ein Transportmittel unterschiedlich orientierte Güter nebeneinander befördert werden. Auf diese Weise besteht nach der Umlenkung der Transportgüter auf ein weiteres Transportmittel die Gefahr, dass eine zunächst vorhandene Ordnung der Güter verloren geht, was zu Problemen bei der weiteren Handhabung der Transportgüter führen kann, bspw. zu Stauungseffekten aufgrund einer nicht geschlossenen regelmäßigen Reihe und/oder aufgrund mehr oder weniger seitlich versetzter Güter, die aufeinander folgend befördert werden.

Ein vorrangiges Ziel der Erfindung besteht daher darin, ein Verfahren und eine entsprechende Förder-, Umlenk- und Ausrichtvorrichtung zur Verfügung zu stellen, die eine Umlenkung und eine gezielte Ausrichtung von Artikeln und/oder Artikelgruppen ermöglichen, um den Stückgütern, Artikeln und/oder Artikel- oder Stückgutgruppen nach der Umlenkung eine definierbare Ausrichtung zueinander geben zu können.

Dieses Ziel der Erfindung wird mit den Gegenständen der unabhängigen Ansprüche erreicht. Merkmale weiterer vorteilhafter Ausgestaltungen der Erfindung finden sich in den jeweiligen abhängigen Ansprüchen. Zur Erreichung des genannten Ziels schlägt die vorliegende Erfindung ein Verfahren zur Umlenkung und zur gleichzeitigen Ausrichtung von Stückgütern, Artikeln und/oder Gruppen von Artikeln oder Stückgütern vor, die in wenigstens zwei ungefähr parallelen Längsreihen von annähernd lückenlos oder gering voneinander beabstandeten oder auch deutlich voneinander beabstandeten Stückgütern oder Artikeln in einer ersten Förderrichtung zu einer Übergabe- und Ausrichteinheit bewegt werden. Typischerweise werden jedoch drei ungefähr parallele Längsreihen von annähernd lückenlos oder gering voneinander beabstandeten Stückgütern oder Artikeln in der ersten Förderrichtung bewegt. Selbstverständlich können die Artikel oder Stückgüter in einzelnen oder auch in allen Längsreihen ausgeprägte Abstände voneinander haben. Diese Abstände können auch unterschiedlich groß sein, bspw. zwischen einzelnen Palettenlagen, die auf die erste Horizontalfördereinrichtung überschoben wurden.

Mittels der Übergabe- und Ausrichteinheit wird ein Teil der Artikel oder Stückgüter in ausgerichteter Anordnung in eine zur ersten Förderrichtung ungefähr senkrechte zweite Förderrichtung weiterbewegt. Um dies zu erreichen, ist die Übergabe- und Ausrichteinheit zur Übergabe und Ausrichtung einer vordersten Querreihe der in wenigstens zwei oder auch drei oder mehr Längsreihen nebeneinander in die erste Förderrichtung bewegten Stückgüter oder Artikel mit einer in oder gegen die erste Förderrichtung beweglichen Anschlageinrichtung gekoppelt, die bei einer Überführung der vordersten Querreihe von Artikeln oder Stückgüter auf die Übergabe- und Ausrichteinheit in eine zur vorder- oder rückseitig bündigen Ausrichtung der vordersten Querreihe von Artikeln oder Stückgütern entsprechende Positionierung oder ggf. Profilierung (bei mehrteiliger Ausbildung) gebracht wird. Anschließend wird die Übergabe- und Ausrichteinheit durch Verschiebung parallel zur ersten Förderrichtung in eine definierte, fluchtende Ausrichtung zur zweiten Förderrichtung gebracht. Schließlich kann die links- oder rechtsbündig ausgerichtete Artikel- oder Stückgutreihe von wenigstens zwei hintereinander angeordneten Artikeln oder Stückgütern in die zweite Förderrichtung weiterbewegt werden.

Wahlweise kann die Anschlageinrichtung über die Breite des Artikel- oder Stückgutstroms mehrteilig ausgebildet sein, wobei die mehreren Teilabschnitte ggf. unabhängig voneinander in oder gegen die erste Förderrichtung beweglich sein können. Normalerweise sind die einzelnen Teile der Anschlageinrichtung jeweils mit der Übergabe- und Ausrichteinheit gekoppelt, jedoch gegenüber dieser in oder gegen die erste Förderrichtung beweglich. Um eine Anpassung an unterschiedliche Artikel- oder Stückgutgrößen zu ermöglichen, kann zudem eine Verschiebbarkeit der einzelnen beweglichen Teile der Anschlageinrichtung quer zur ersten Förderrichtung vorgesehen sein, bspw. durch einmalige Justierung, welche die Position der einzelnen Teile quer zur ersten Transportrichtung für die Handhabung einer bestimmten Stückgut- oder Artikelgröße festlegt. Bei einem Produktwechsel kann diese Justierung dann ggf. angepasst werden.

Weiterhin kann bei einer mehrteiligen Anschlageinrichtung vorgesehen sein, dass die beweglichen Teilabschnitte der Anschlageinrichtung nach der erfolgten Überführung der vordersten Querreihe der Artikel oder Stückgüter des Artikel- oder Stückgutstroms auf die Übergabe- und Ausrichteinheit parallel zur ersten Förderrichtung aus dem Eingriff mit den Artikeln oder Stückgütern gebracht werden, damit nicht einzelne Teile der Anschlageinrichtung mit der anschließend in Querrichtung zur ersten Förderrichtung transportierten vordersten Querreihe der Artikel oder Stückgüter kollidieren.

Die Anschlageinrichtung kann bspw. mit der in oder gegen die Förderrichtung verschieb- oder bewegbaren Übergabe- und Ausrichteinheit gekoppelt, insbesondere an dieser verschiebbar verankert sein. Auf diese Weise kann sie je nach Bedarf in eine gewünschte Anschlagposition gebracht oder aus dem Eingriff mit den Artikeln oder Stückgütern gebracht werden. Die Bewegungs- oder Verschieberichtung der Anschlageinrichtung erfolgt parallel zur ersten Förderrichtung. Alternativ hierzu ist es auch denkbar, die Anschlageinrichtung unabhängig von der Übergabe- und Ausrichteinheit zu verankern, bspw. an einem Basisabschnitt, einem Gehäuse oder Wandabschnitt o. dgl. der Vorrichtung.

Die einteilig oder mehrteilig ausgebildete Anschlageinrichtung kann bspw. durch ein parallel zur ersten Förderrichtung verschiebbares Geländer o. dgl. gebildet sein, aus dem ein zusätzliches Positionierungselement oder auch mehrere zusätzliche Positionierungselemente verstellbar und herausragen können, um bspw. eine abgestuften Profilierung der heranrückenden Artikel- oder Gebindequerreihe zu ermöglichen. Das oder die Positionierungselemente können wahlweise unabhängig von der Bewegung der verstellbaren Anschlageinrichtung bewegt werden. Alternativ hierzu können sie jedoch auch an der Anschlageinrichtung verankert sein und gegenüber dieser in oder gegen die erste Transportrichtung verstellt werden.

Eine weitere alternative Ausführungsvariante kann zudem vorsehen, dass wenigstens ein Positionierungselement, ggf. auch mehrere Positionierungselemente zusätzlich parallel zur zweiten Transportrichtung verstellt werden können, vorzugsweise in Bewegungen relativ zur Anschlageinrichtung, für die keine solche zusätzliche Bewegungskomponente erforderlich ist. Die ggf. parallel zur zweiten Förderrichtung verstellbaren Positionierungselemente können auf diese Weise an unterschiedliche Artikel- oder Gebindegrößen angepasst werden, so dass die erfindungsgemäße Vorrichtung und das erfindungsgemäße Verfahren sehr universell einsetzbar ist.

Die Artikel, Stückgüter und/oder Artikelgruppen bzw. Stückgutgruppen können bspw. durch Behälter und/oder Behältergruppen gebildet sein. Grundsätzlich umfassen die gewählten Begriffe der Artikel oder Artikelgruppen jedoch alle Arten von Stückgütern, Kartons, Gebinde etc. Somit können grundsätzlich auch Behälter, Flaschen oder Gebinde mit Behältern oder Flaschen mittels des erfindungsgemäßen Verfahrens und der erfindungsgemäßen Vorrichtung ausgerichtet und umgelenkt werden. So können das vorliegende Verfahren und das vorliegende System bspw. für Artikelgruppen verwendet werden, die aus mehreren Artikeln mit einer Umreifung und/oder einer Schrumpffolienverpackung gebildet sind. Mehrere Artikelgruppen können erfindungsgemäß zueinander ausgerichtet werden.

Auch kann vorgesehen sein, dass ein oder mehrere Artikelgruppen, welche nicht miteinander zu einer Artikelgruppe zusammengefasst sind, durch das erfindungsgemäße Verfahren zueinander ausgerichtet und umgelenkt werden und/oder dass ein oder mehrere Artikel und Artikelgruppen ausgerichtet und umgelenkt werden. Zudem kann für das erfindungsgemäße Verfahren und für das erfindungsgemäße System bspw. vorgesehen sein, dass eine Umlenkung von Artikeln und/oder Artikelgruppen um einen Umlenkwinkel von näherungsweise 90 Grad erfolgt. Alternativ können das Verfahren und das System auch für Umlenkungen um einen spitzen oder um einen stumpfen Winkel vorgesehen sein.

Vorzugsweise werden bei dem erfindungsgemäßen Verfahren die Artikel oder Stückgüter zur Bewegung in die erste Förderrichtung auf einer ersten Horizontalfördereinrichtung befördert und bewegt, die für eine intermittierende Förderbewegung der in wenigstens zwei ungefähr parallelen Reihen von annähernd lückenlos oder gering voneinander beabstandeten Stückgütern oder Artikeln sorgt, die abgestimmt ist auf die oszillierenden Bewegungen der Übergabe- und Ausrichteinheit in oder gegen die erste Förderrichtung. Zudem ist bei dieser Variante die Übergabe- und Ausrichteinheit als zweite Horizontalfördereinrichtung ausgebildet, die als Ganzes zwischen einer ersten Position und einer zweiten Position in oder gegen die erste Förderrichtung beweglich ist.

Die Übergabe- und Ausrichteinheit weist in der ersten Position einen minimalen Abstand zur ersten Horizontalfördereinrichtung auf bzw. grenzt weitgehend ohne dazwischen befindliche Lücke unmittelbar an die erste Horizontalfördereinrichtung. In ihrer zweiten, variablen Position weist die zweite Horizontalfördereinrichtung eine definierbare Ausrichtung zur fluchtenden Übergabe der ausgerichteten Artikel oder Stückgüter zu einer in zweiter Förderrichtung gering beabstandeten dritten Horizontalfördereinrichtung auf, durch welche die ausgerichteten Artikel oder Stückgüter mittels der als zweite Horizontalfördereinrichtung fungierenden Übergabe- und Ausrichteinheit in der zweiten Förderrichtung an die dritte Horizontalfördereinrichtung übergeben werden, welche die links- oder rechtsbündig ausgerichteten Artikel oder Stückgüter weitertransportieren kann.

Das erfindungsgemäße Verfahren sieht eine geradlinige Förderung der auszurichtenden und/oder umzulenkenden Artikel oder Artikelgruppen auf dem ersten Fördermittel in der ersten Bewegungsrichtung vor. Dieses erste Fördermittel bzw. die erste Horizontalfördereinrichtung kann die Artikel oder Artikelgruppen bspw. von einer Palettenlage nach einer Depalettierung übernehmen und in der zunächst unveränderten Palettenformation befördern. Da die Artikelgruppen quaderförmig sein können und die Palettenlage Artikelgruppen in unterschiedlichen räumlichen Ausrichtungen und/oder mit Lücken wie bspw. in sog. Kaminformationen enthalten kann, können bei einer Umlenkung der gesamten Palettenlagen um bspw. 90 Grad Probleme hinsichtlich einer gewünschten und/oder für eine weitere Handhabung notwendigen Ordnung oder Formatierung auftreten.

So ist für den Fachmann unmittelbar ersichtlich, dass bei einer Kaminlage mit einer mittigen Lücke nach einer 90°-Umlenkung, die normalerweise nicht die gesamte Lage betrifft, sondern bspw. die zuvorderst beförderte Reihe von Artikelgruppen, kein sauberer links- oder rechtsbündiger Weitertransport möglich ist. So können bspw. die äußeren Artikelgruppen oder Gebinde in Längsrichtung auf der ersten Fördereinrichtung befördert werden, während eine dazwischen befindliche Artikelgruppe quer dazu ausgerichtet ist, so dass nach der 90°-Umlenkung zwar ein lückenloser Weitertransport erfolgen kann, jedoch ohne eine ggf. gewünschte linksbündige Ausrichtung der umgelenkten Reihe. Wird diese Reihe für die Umlenkung zunächst an einen Anschlag befördert, ist allenfalls eine rechtsbündige Ausrichtung möglich.

Alternativ können bei quaderförmigen Artikeln oder Stückgütern auch Palettenlagen gebildet sein, bei denen sich längs ausgerichtete mit quer ausgerichteten Artikeln oder Stückgütern abwechseln, ohne dass dazwischen Lücken gebildet sind. Auch solche Palettenlagen können auf die erwähnte Weise umgelenkt und ausgerichtet werden, wobei hier jedoch eine einteilige Anschlageinrichtung ausreicht und ihren Zweck erfüllen kann. Je nach Ausrichtung der Artikel oder Stückgüter weisen sie in die erste Transportrichtung eine größere oder kleinere Länge auf, je nachdem, ob die Schmalseiten oder Längsseiten der quaderförmigen Artikel oder Stückgüter parallel zur ersten Förderrichtung ausgerichtet sind. Die verstellbare Anschlageinrichtung muss somit weiter oder weniger weit gegen die erste Förderrichtung arretiert werden, um jeweils eine gleiche rückseitig bündige Ausrichtung der jeweils vordersten Querreihe von Artikeln oder Stückgüter für die nachfolgende Überführung auf die dritte Fördereinrichtung zu gewährleisten.

Die in der Praxis beim Überführen und Umlenken von Artikeln und Stückgütern festgestellten Mängel behebt das erfindungsgemäße Verfahren, indem die Artikel oder Artikelgruppen mittels des ersten Fördermittels bzw. der ersten Horizontalfördereinrichtung zu einer dem ersten Fördermittel nachgeordneten und parallel zur ersten Bewegungsrichtung oszillierend beweglichen und als zweites Fördermittel ausgebildeten Übergabeeinheit bewegt werden, die ein oder mehrere quer zur ersten Bewegungsrichtung des ersten Fördermittels verstellbare Positionierungsmittel mit geeigneter Anschlagwirkung und -kontur umfasst, gegen die das erste Fördermittel eine definierte Anzahl an Artikeln und oder Artikelgruppen führt, wobei anschließend die auf die Übergabeeinheit überführten Artikel und/oder Artikelgruppen von dieser an ein drittes Fördermittel bzw. eine dritte Horizontalfördereinrichtung übergeben und/oder überführt werden und durch das dritte Fördermittel in einer zweiten Bewegungsrichtung, die ungefähr senkrecht zur ersten Bewegungsrichtung verläuft, weitertransportiert werden. In diesem Zusammenhang kann insbesondere vorgesehen sein, dass die Artikel, Stückgüter und/oder Artikel- oder Stückgutgruppen während ihrer Übergabe oder Überführung von der Übergabe- und Ausrichteinheit an das dritte Fördermittel mit einer dritten Bewegungskomponente beaufschlagt werden, die parallel zur zweiten Bewegungsrichtung verläuft.

Das erfindungsgemäße Verfahren kann insbesondere entsprechend der nachfolgenden Reihenfolge ablaufen. Dabei werden die Artikel oder Stückgüter zunächst so lange mittels der ersten Horizontalfördereinrichtung in erster Förderrichtung gegen die mit der sich in der ersten Position befindlichen Übergabe- und Ausrichteinheit zusammenwirkende mehrteilige Anschlageinrichtung bewegt, bis zumindest die vorderste Reihe der Artikel oder Stückgüter unter Anlage an die profilierte, einteilige oder ggf. auch mehrteilige Anschlageinrichtung auf die zunächst stillstehende zweite Horizontalfördereinrichtung der Übergabe- und Ausrichteinheit überführt ist, wonach die erste Horizontalfördereinrichtung angehalten wird. Danach wird die Übergabe- und Ausrichteinheit mit den darauf befindlichen Artikeln oder Stückgütern unter Stillstand ihrer zweiten Horizontalfördereinrichtung parallel zur ersten Förderrichtung und ungefähr quer zur zweiten Förderrichtung aus ihrer ersten Position in die definierbare zweite Position gebracht, wobei gleichzeitig, kurz zuvor oder unmittelbar danach die einteilige Anschlageinrichtung bzw. die einzelnen Teile der mehrteiligen Anschlageinrichtung durch Verschiebung parallel zur ersten Förderrichtung aus dem Eingriff mit den auf der Übergabe- und Ausrichteinheit befindlichen Artikel oder Stückgüter gebracht wird bzw. werden.

Schließlich kann die zweite Horizontalfördereinrichtung der in ihre zweite Position gebrachten Übergabe- und Ausrichteinheit anlaufen und die darauf befindliche, links- oder rechtsbündig ausgerichtete Reihe von Artikeln oder Stückgütern in die zweite Förderrichtung auf die mit der Übergabe- und Ausrichteinheit fluchtende, sich bewegende dritte Horizontalfördereinrichtung überführen. Auf diese Weise kann die Übergabe- und Ausrichteinheit nach Überführung aller dort befindlichen Artikel oder Stückgüter in die zweite Förderrichtung an die dritte Horizontalfördereinrichtung aus ihrer zweiten Position in die erste Position gegen die erste Förderrichtung zur ersten Horizontalfördereinrichtung zurückbewegt und gleichzeitig die zweite Horizontalfördereinrichtung angehalten werden.

Zudem wird vorzugsweise die einteilige oder mehrteilige Anschlageinrichtung gegen die erste Förderrichtung in ihre ggf. profilierte Ausrichtposition zur Bildung eines Anschlags für die dagegen bewegten Artikel oder Stückgüter gebracht. Die erste Horizontalfördereinrichtung kann danach wieder für die Überführung einer weiteren Reihe von nun zuvorderst stehenden Artikel oder Stückgüter auf die Übergabe- und Ausrichteinheit gegen die Anschlageinrichtung anlaufen, womit ein weiterer Zyklus entsprechend obiger Beschreibung und danach eine beliebige Zahl weiterer Zyklen durchlaufen werden können.

Die Förderung, Umlenkung und Ausrichtung der Stückgüter, Artikel und/oder Stückgut- oder Artikelgruppen kann bspw. in den nachfolgend erläuterten und aufeinander folgenden Schritten erfolgen. Zunächst werden die Artikel oder Artikelgruppen auf dem ersten Fördermittel transportiert, auf das sie bspw. von einer Depalettierungseinrichtung o. dgl. überführt worden sind. In geradliniger erster Bewegungsrichtung wird eine definierte Anzahl von Artikeln oder Artikelgruppen auf die als intermittierend förderndes zweites Fördermittel fungierende Übergabe- und Ausrichteinheit überschoben oder überführt. Typischerweise wird bspw. eine zuvorderst beförderte durchgängige Reihe von Artikeln oder Artikelgruppen auf die Übergabeeinheit übernommen, während die sich lückenlos daran anschließenden Artikel oder Artikelgruppen vorläufig noch auf dem ersten Fördermittel bleiben. Während dieser Übergabe oder dieses Überschubs befindet sich die Übergabeeinheit vorzugsweise unmittelbar angrenzend am Ende des ersten Fördermittels, so dass nach Möglichkeit keine Lücke zwischen den beiden Förderebenen besteht.

Nach dem Überschub oder der Übergabe der gewünschten Anzahl von Artikeln oder Artikelgruppen auf die Übergabe- und Ausrichteinheit gegen einen mechanischen Anschlag wie bspw. ein Geländer oder einen Querbalken, kann das erste Fördermittel zumindest kurzzeitig gestoppt werden, damit keine weiteren Artikel oder Artikelgruppen auf die Übergabeeinheit gedrückt werden und dort ggf. zu unerwünschten Staueffekten führen können. Anschließend ist es sinnvoll, die in oder gegen die Förderrichtung des ersten Fördermittels bewegliche Übergabeeinheit um einen definierten Wegabschnitt von der Kante des ersten Fördermittels wegzubewegen, um einerseits einen exakt fluchtenden Förderanschluss zum dritten Fördermittel zu erhalten, dessen Förderrichtung normalerweise ungefähr senkrecht zur Förderrichtung des ersten Fördermittels ausgerichtet ist.

Andererseits wird durch diese Distanzierung vermieden, dass die auf der Übergabeeinheit stehenden und in senkrechte Bewegung zur ursprünglichen Förderrichtung des ersten Fördermittels versetzten Artikel oder Artikelgruppen aufgrund des unmittelbaren und/oder teilweise berührenden Kontakts mit den noch auf dem nun stillstehenden ersten Fördermittel befindlichen nachfolgenden Artikeln oder Artikelgruppen der folgenden Reihen von diesen beinträchtigt oder blockiert werden oder diese teilweise mitziehen, verdrehen oder verschieben können. Das Positionierungsmittel bildet den Anschlag für die überschobene Reihe von Artikeln oder Artikelgruppen, wobei eine Verstellbarkeit um einen definierbaren Verstellweg bereits bei der Überführung auf die Übergabeeinheit für die gewünschte Ausrichtung der Artikel oder Artikelgruppen für den nachfolgenden senkrechten Weitertransport und die Überführung auf das dritte Fördermittel sorgt.

Nachdem die Anschlageinrichtung bzw. die Positionierungsmittel wieder von den Artikeln oder Artikelgruppen zurückgezogen wurden, was zur Vermeidung eines blockierenden Kontakts notwendig ist, kann die auf der Übergabe- und Ausrichteinheit befindliche zweite Horizontalförder- oder Transporteinrichtung anlaufen und die Artikel auf das sich unmittelbar anschließende dritte Fördermittel überführen, das vorzugsweise in synchroner Fördergeschwindigkeit mit der Übergabeeinheit läuft und die Artikel oder Artikelgruppen in der gewünschten Ausrichtung, insbesondere in linksbündiger Ausrichtung zu weiteren, nachfolgenden Handhabungseinrichtungen weiterbefördern kann.

Wie erwähnt, werden die Artikel und/oder Artikelgruppen in einer ersten Bewegungsrichtung und damit mit mindestens einer ersten Bewegungskomponente auf dem ersten Fördermittel in Richtung der dem ersten Fördermittel nachgeordneten Übergabeeinheit bewegt. Das erste Fördermittel ist ein Horizontalfördermittel und kann insbesondere als Transportband ausgebildet sein. Davon abgesehen können Fördermittel verwendet werden, welche beispielsweise über Rollen verfügen oder ggf. auch leicht schräg angeordnet sein können. Dem Fachmann sind weitere geeignete Fördermittel bekannt, die aus diesem Grunde nicht explizit erwähnt werden.

Optional kann vorgesehen sein, dass im Bereich des ersten Fördermittels bereits ein oder mehrere Führungselemente angeordnet sind, welche mehrere Artikel und/oder Artikelgruppen nebeneinander in vordefinierten Bahnen auf dem ersten Fördermittel lenken. Beispielsweise können die Artikel und/oder Artikelgruppen durch die Führungselemente in leicht V-förmigen Bahnen oder parallel zueinander und voneinander beabstandet gelenkt werden. Bei den Führungselementen kann es sich beispielsweise um geeignete Führungsschienen und/oder um Führungsgeländer und/oder um Führungsstreben handeln, welche geeignet sind, die Artikel, Artikelgruppen, Gebinde oder Stückgüter leicht auseinander zu drängen und auf diese Weise kleine Lücken quer zur ersten Förderrichtung zwischen den einzelnen Reihen mit hintereinander beförderten Artikeln zu erzeugen. Diese erwähnten Führungselemente können ggf. jeweils winklig verstellbar und/oder neigbar ausgebildet sein.

Die auf der ersten Horizontalfördereinrichtung bewegten Stückgüter, Artikel und/oder Artikel- oder Stückgutgruppen können wahlweise von gleicher Größe und Ausrichtung, typsicherweise jedoch von teilweise unterschiedlicher Ausrichtung und/oder geometrischer Ausbildung sein.

Die Übergabe- und Ausrichteinheit weist ein weiteres Fördermittel - hier als zweite Horizontalfördereinrichtung bezeichnet - auf, dessen Artikel- und/oder Artikelgruppentransport zumindest näherungsweise senkrecht zum Artikeltransport und/oder Artikelgruppentransport des ersten Fördermittels ausgebildet ist. Das weitere bzw. zweite Fördermittel kann beispielsweise als relativ kurzes Transportband ausgebildet sein, dessen Länge zumindest der Breite der Förderebene des ersten Fördermittels entsprechen muss, um einen störungsfreien Artikeltransport und einen nahtlosen Anschluss gewährleisten zu können. Auch sind Ausführungsformen vorstellbar, bei welchen der Artikel- und/oder Artikelgruppentransport des weiteren oder zweiten Fördermittels in einem stumpfen oder in einem spitzen Winkel zum Artikel- und/oder Artikelgruppentransport des ersten Fördermittels verläuft. Die Bewegung von Artikeln und/oder von Artikelgruppen durch das erste Fördermittel kann hierbei grundsätzlich alternierend mit oder ohne zeitliche Unterbrechung zur Bewegung von Artikeln durch das weitere oder zweite Fördermittel erfolgen. Normalerweise wird das erste Fördermittel jedoch anzuhalten sein, sobald das zweite Fördermittel die Artikel in rechtem Winkel in der zweiten Förderrichtung auf das dritte Fördermittel überführt. Erst nach Abschluss dieser Überführung und nach einer Rückbewegung zur Schließung der Lücke zwischen erstem und zweitem Fördermittel setzt das erste Fördermittel sinnvollerweise seine Bewegung wieder fort.

Wie erwähnt nimmt somit bei einer Variante des Verfahrens die Übergabe- und Ausrichteinheit Artikel und/oder Artikelgruppen vom ersten Fördermittel entgegen und wird zeitlich nach der Entgegennahme parallel zur ersten Bewegungsrichtung bewegt und/oder versetzt, wonach die Übergabe- und Ausrichteinheit nach der Überführung und/oder

Übergabe von Artikeln und/oder Artikelgruppen an das dritte Fördermittel in Richtung zum ersten Fördermittels und entgegen der ersten Bewegungsrichtung bewegt und/oder versetzt wird. Zudem wird die Übergabe- und Ausrichteinheit zwischen ihrer ersten Anschlagposition zur Entgegennahme von Artikeln und/oder Artikelgruppen vom ersten Fördermittel und ihrer - ggf. einstell- oder justierbaren - zweiten Anschlagposition zur Weitergabe von Artikeln und/oder Artikelgruppen an das dritte Fördermittel versetzt und/oder bewegt. Die erste Anschlagposition ist gemäß obiger Definition die annähernd lückenlose Annäherung an das erste Fördermittel, während die zweite Anschlagposition einen Abstand der beiden Fördermittel und einen annähernd fluchtenden Übergang zum dritten Fördermittel vorsieht. Zumindest die erste Anschlagposition bleibt unverändert und ist konstruktiv vorgegeben, während die zweite Anschlagposition durchaus variabel und von verschiedenen Parametern abhängig sein kann, so bspw. von der Breite der Artikelgruppe, der Position des dritten Fördermittels, der gewünschten Ausrichtung der Artikel auf dem dritten Fördermittel etc.

Gemäß einem wichtigen Aspekt des Verfahrens umfasst die Übergabe- und Ausrichteinheit eine Anschlageinrichtung mit einem oder mehreren verstellbaren Positionierungsmitteln mit Anschlagskonturen, gegen die das erste Fördermittel eine definierte Anzahl von Artikeln und/oder Artikelgruppen führt. Die gestufte Anschlagskontur kann bspw. eine Kontaktfläche aufweisen oder als Kontaktfläche ausgebildet sein, die normalerweise senkrecht zur ersten Bewegungsrichtung steht. Sind zwei oder mehr solche Positionierungsmittel vorhanden, so können diese jeweils eine Anschlagskontur besitzen. Die Anschlagskonturen von mehreren Positionierungsmitteln können hierbei parallel angeordnet sein. Zwei oder mehrere Positionierungsmittel können beispielsweise selektiv oder synchron, in und entgegen der Richtung der ersten Bewegungskomponente und ggf. parallel zueinander verstellbar ausgebildet sein. Es ist denkbar, dass die Anschlagskonturen bei Oberflächenkontakt mit einem Artikel und/oder einer Artikelgruppe eine federnde Nachgiebigkeit aufweisen.

Zeitlich nach der Führung der Artikel und/oder Artikelgruppen gegen die Anschlageinrichtung mit ihrer verstellbaren Anschlagskontur werden die Artikel und/oder Artikelgruppen von der Übergabe- und Ausrichteinheit an das dritte Fördermittel übergeben und/oder überführt. Der Weitertransport von Artikeln und/oder Artikelgruppen auf dem dritten Fördermittel erfolgt mit der zweiten Bewegungsrichtung oder - komponente, die senkrecht zur ersten Bewegungsrichtung oder -hauptkomponente verläuft. So kann hierbei vorzugsweise vorgesehen sein, dass der Artikeltransport und/oder der Artikelgruppentransport auf dem dritten Fördermittel senkrecht zum Artikeltransport und/oder zum Artikelgruppentransport auf dem ersten Fördermittel verlaufen. Auch sind weitere unterschiedliche Verlaufsrichtungen von Artikel- und/oder Artikelgruppentransportvarianten des ersten, zweiten und des dritten Fördermittels vorstellbar, beispielsweise unter einem stumpfen oder spitzen Winkel, bei welchen die Artikel und/oder die Artikelgruppen des ersten Fördermittels zumindest eine senkrechte Bewegungskomponente mit den Artikeln und/oder Artikelgruppen des dritten Fördermittels aufweisen.

Umfasst die Übergabe- und Ausrichteinheit ein weiteres Fördermittel, so kann vorgesehen sein, dass der Artikel- und/oder Artikelgruppentransport des weiteren Fördermittels und/oder der Artikel- und/oder Artikelgruppentransport des dritten Fördermittels in parallelen bzw. fluchtenden Verlaufsrichtungen geführt wird. Hierbei werden die Artikel und/oder die Artikelgruppen während des Übergebens und/oder Überführens von der Übergabe- und Ausrichteinheit an das dritte Fördermittel mit einer dritten Bewegungsrichtung oder -komponente bewegt, die parallel zur mindestens einen zweiten Bewegungsrichtung bzw. -komponente verläuft. Weiter können die Transportgeschwindigkeit von Artikeln und/oder Artikelgruppen des dritten Fördermittels und die Transportgeschwindigkeit von Artikeln und/oder Artikelgruppen des weiteren bzw. zweiten Fördermittels annähernd identisch sein.

Erfindungsgemäß bilden im Rahmen des vorliegenden Verfahrens zwei oder mehr der an das dritte Fördermittel übergebenen und/oder überführten Artikel und/oder Artikelgruppen miteinander eine bündige Außenkante, die sich parallel zur zweiten Bewegungskomponente oder -richtung erstreckt. Die bündige Außenkante kann beispielsweise lotrecht zur ersten Bewegungskomponente verlaufen. Die auf dem dritten Fördermittel transportieren Artikel und/oder Artikelgruppen können sich in der zweiten Transportrichtung bewegen, wobei die Transportrichtung parallel zur bündigen Außenkante verläuft. Sind die umzulenkenden und auszurichtenden Artikel und/oder Artikelgruppen homogen ausgebildet, so können zwei oder mehr der an das dritte Fördermittel übergebene und/oder überführte Artikel und/oder Artikelgruppen miteinander zwei bündige Außenkanten bilden, die zueinander parallel und in Richtung der zweiten Bewegungskomponente verlaufen. Sind die Artikel jedoch unterschiedlich orientiert und/oder unterschiedlich groß, so kann nur eine der Reihenlängskanten bündig ausgerichtet sein, während die andere Längskante die durch die gestufte Anschlageinrichtung vorgegebene, unregelmäßige bzw. in gleicher Weise gestufte Kontur aufweist.

Die vorliegende Erfindung schlägt zur Erreichung des oben genannten Ziels weiterhin eine Vorrichtung zur Förderung, zur Umlenkung und Ausrichtung von Stückgütern, Artikeln und/oder Gruppen von Artikeln oder Stückgütern vor, die eine erste Horizontalfördereinrichtung aufweist, die einer Förderung der Stückgüter oder Artikel in wenigstens zwei ungefähr parallelen Reihen von annähernd lückenlos oder gering voneinander beabstandeten Stückgütern oder Artikeln in einer ersten Förderrichtung zu einer als zweite Horizontalfördereinrichtung ausgebildeten und zwischen zwei Positionen parallel zur ersten Förderrichtung beweglichen Übergabe- und Ausrichteinheit dient. Dabei werden die Stückgüter oder Artikel gegen eine einteilige oder mehrteilig ausgebildete und parallel zur ersten Förderrichtung bewegliche Anschlageinrichtung zur vorder- oder rückseitig bündigen Ausrichtung der Artikel oder Stückgüter befördert. Weiterhin umfasst die Vorrichtung eine dritte Horizontalfördereinrichtung zur Weiterförderung der in einer zweiten Förderrichtung links- oder rechtsbündig ausgerichteten Artikel oder Stückgüter in die zweite Förderrichtung, die ungefähr senkrecht zur ersten Förderrichtung orientiert ist.

Die Anschlageinrichtung ist entweder einteilig durchgängig gestaltet oder aus mehreren Teilen gebildet, die zur Profilierung und vorder- oder rückseitig bündigen Ausrichtung der vorderen Stirnseite6 der zuvorderst befindlichen Reihe von Artikeln oder Stückgütern unabhängig voneinander in oder gegen die ersten Förderrichtung beweglich sind. Zudem ist die als zweite Horizontalfördereinrichtung ausgebildete Übergabe- und Ausrichteinheit als Ganzes zwischen einer ersten Position und einer zweiten Position in oder gegen die erste Förderrichtung beweglich. Dabei weist die Übergabe- und Ausrichteinheit in der ersten Position einen minimalen Abstand zur ersten Horizontalfördereinrichtung auf, während sie in ihrer zweiten, variablen Position eine definierbare Ausrichtung zur fluchtenden Übergabe der ausgerichteten Artikel oder Stückgüter zu einer in zweiter Förderrichtung gering beabstandeten dritten Horizontalfördereinrichtung aufweist. Schließlich kann vorgesehen sein, dass zumindest die erste und die zweite Horizontalfördereinrichtung in gegenseitiger Abstimmung und/oder in Abhängigkeit von der in erster oder zweiter Position befindlichen Übergabe-und Ausrichteinheit aktivierbar oder deaktivierbar sind.

Wahlweise sind zumindest der ersten Horizontalfördereinrichtung Sensoreinrichtungen zur Erfassung der aktuellen Positionen der darauf befindlichen und beförderten Artikel oder Stückgüter zugeordnet. Wahlweise können auch der zweiten Horizontalfördereinrichtung und/oder der Anschlageinrichtung und/oder der dritten Horizontalfördereinrichtung geeignete Sensoren zur Erfassung ihrer Betriebszustände und/oder zur Erfassung der aktuellen Positionen der darauf befindlichen und beförderten Artikel oder Stückgüter zugeordnet sein. Vorzugsweise liefern diese Sensoreinrichtungen ihre Signale an geeignete Auswerteeinrichtungen, durch welche die Bewegungsabläufe der beschriebenen Komponenten der Vorrichtung in aufeinander abgestimmter Weise gesteuert werden können, ohne dass es zu Störungen und/oder Kollisionen kommen kann.

So umfasst die vorliegende Erfindung mit der beschriebenen Vorrichtung ein Artikel- oder Behälterflusssystem, welches über eine Steuereinheit zur Verknüpfung der verschiedenen aufeinander folgenden Bewegungen und Förderzustände der Komponenten verfügt. Der Steuereinheit können Informationen zur Anordnung und/oder Anzahl und/oder geometrischen Ausbildung umzulenkender und auszurichtender Artikel und/oder Artikelgruppen vorgegeben werden. Hierbei kann beispielsweise eine Eingabeeinheit vorhanden sein, über welche ein Benutzer Angaben zu einer oder mehreren der soeben erwähnten Informationen vornehmen kann. Weiterhin können optische oder mittels anderer physikalischer Effekte arbeitende Erfassungseinrichtungen vorhanden sein, welche mit der Steuereinheit wirkverbunden sind und ihre Sensordaten an die Steuereinheit übermitteln. Es ist zudem sinnvoll, dass sowohl eine Eingabeeinheit als auch eine oder mehrere optische oder anders funktionierende Erfassungseinrichtungen vorhanden sind. Die Erfassungseinrichtungen sind bspw. zur Bestimmung der exakten Zeitpunkte für das temporäre Anhalten des ersten Fördermittels, für die oszillierenden Bewegungen der Übergabe- und Ausrichteinheit zwischen ihren wenigstens zwei Endpositionen bzw. Anschlagpositionen sowie für die Steuerung der Fördereinheiten der zweiten und/oder dritten Fördermittel sinnvoll.

Zudem sind Ausführungsformen sinnvoll, die mindestens eine optische Erfassungseinrichtung aufweisen, welche ein Signal an die Steuereinheit weitergibt, sobald Artikel und/oder Artikelgruppen gegen die mindestens eine Anschlageinrichtung mit ihrer verstellbaren Anschlagskontur geführt worden sind und/oder die Artikel und/oder Artikelgruppen einen Erfassungsbereich der mindestens einen optischen Erfassungseinrichtung passieren. Die mindestens eine optische Erfassungseinrichtung kann hierbei derart angeordnet sein, dass sich ihr Erfassungsbereich in Richtung der zweiten Bewegungskomponente und zumindest über Teilbereiche der Übergabeeinheit erstreckt. In diesem Zusammenhang ist es u.a. sinnvoll, dass bei der Signalübertragung von der optischen Erfassungseinrichtung an die Steuereinheit eine Bewegung von Artikeln und/oder Artikelgruppen auf dem ersten Fördermittel unterbunden wird. Auch kann vorgesehen sein, dass bei Signalweitergabe der optischen Erfassungseinrichtung an die Steuereinheit die ein oder mehreren Positionierungsmittel von den Artikeln und/oder Artikelgruppen weg bewegt werden und/oder dass bei Signalweitergabe die Übergabeeinheit in Richtung der ersten Bewegungskomponente und entlang einer vorgegebenen Führungsstrecke bewegt und/oder versetzt wird.

Zudem ist vorstellbar, dass im Bereich des dritten Fördermittels eine weitere optische Erfassungseinrichtung angeordnet ist, welche den Weitertransport von Artikeln und/oder Artikelgruppen auf dem dritten Fördermittel erkennt und bei Erkennung ein Signal an die Steuereinheit weitergibt. Die Steuereinheit kann hierbei derart ausgebildet sein, dass sie bei Eingang des Signals eine Rückversetzung und/oder Rückbewegung der Übergabeeinheit entgegen der ersten Bewegungskomponente vornimmt und/oder eine Bewegung bzw. Verstellung der Positionierungsmittel in Richtung von auf dem ersten Fördermittel angeordneten Behältern oder Artikeln bewirkt. Weiterhin ist denkbar, dass nach Rückversetzung und/oder Rückbewegung der Übergabeeinheit und nach Verstellung der Positionierungsmittel in Richtung von auf dem ersten Fördermittel angeordneten Behältern die Steuereinheit eine Bewegung von Artikeln und/oder Artikelgruppen auf dem ersten Fördermittel auslöst. So kann die Steuereinheit mit dem ersten Fördermittel derart in Wirkzusammenhang stehen, dass die Führung von Artikeln und/oder Artikelgruppen vom ersten Fördermittel an die Anschlagskontur über ein definiertes Zeitintervall erfolgt, wobei das definierte Zeitintervall durch die Steuereinheit in Abhängigkeit von der vorgegebenen Information und/oder in Abhängigkeit der Verstellung des mindestens einen Positionierungsmittels und/oder in Abhängigkeit einer Istposition der Übergabeeinheit entlang der Führungsstrecke vorgebbar ist.

Für den Fachmann ist es klar, dass nicht lediglich optische Sensoren im Rahmen der vorliegenden Erfindung verwendet werden können, sondern dass beispielsweise auch akustische und/oder Tastsensoren anstelle oder ergänzend zu den optischen Sensoren in Betracht kommen können. Es kann bspw. sein, dass ein oder mehrere Positionierungsmittel über Tastsensoren verfügen, die bei Oberflächenkontakt mit einem Artikel und/oder einer Artikelgruppe ein Signal an die Steuereinheit weitergeben, die in entsprechender Weise die Fördermittel und die Übergabe- und Ausrichteinheit steuert.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

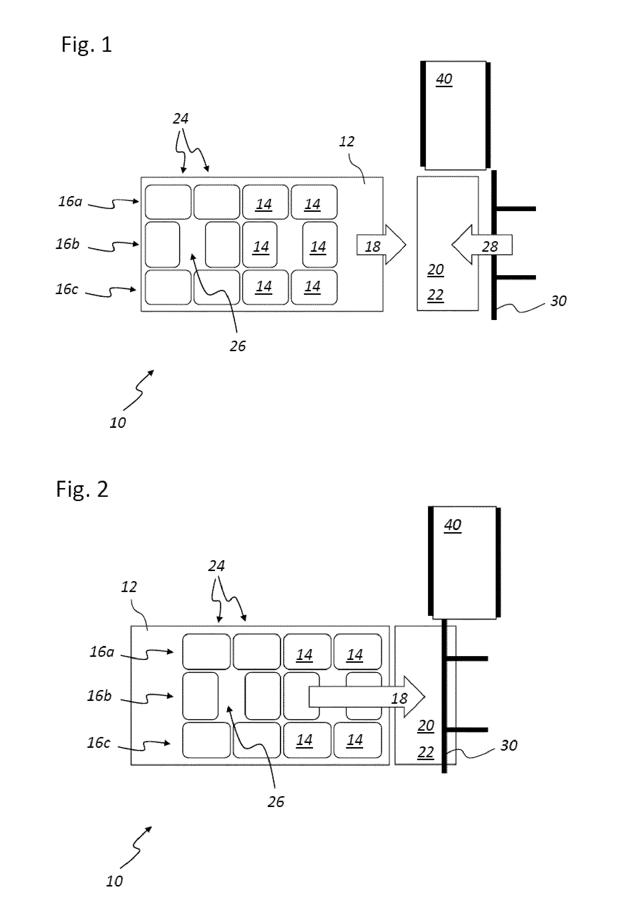

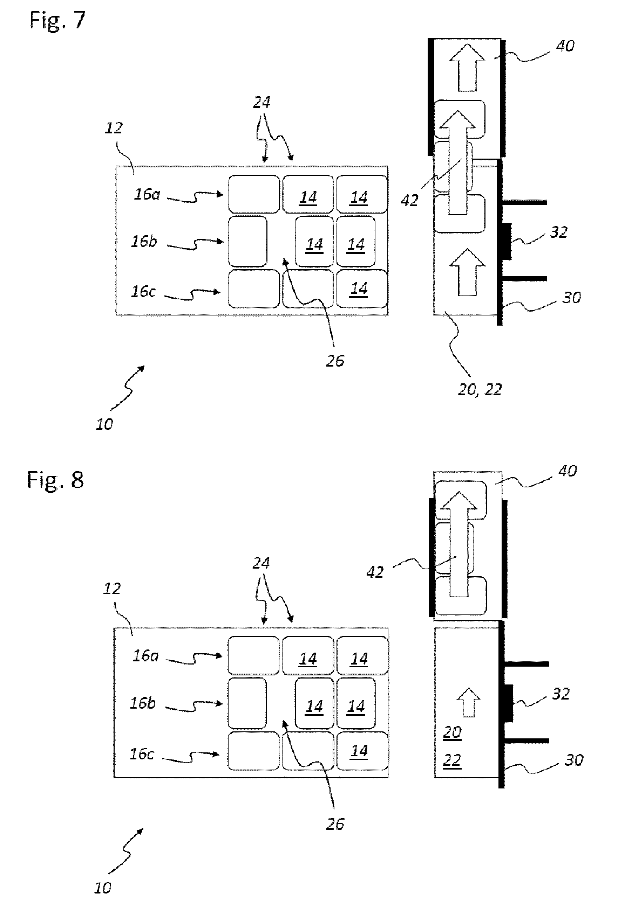

Figuren 1 bis 11 zeigen in mehreren schematischen Darstellungen aufeinander folgenden Förder- und Ausrichtungsschritte für Gebinde, Stückgüter oder Artikel gemäß einem erfindungsgemäßen Verfahren zur Umlenkung und Ausrichtung von Stückgütern, Artikeln und/oder Gruppen von Artikeln oder Stückgütern.

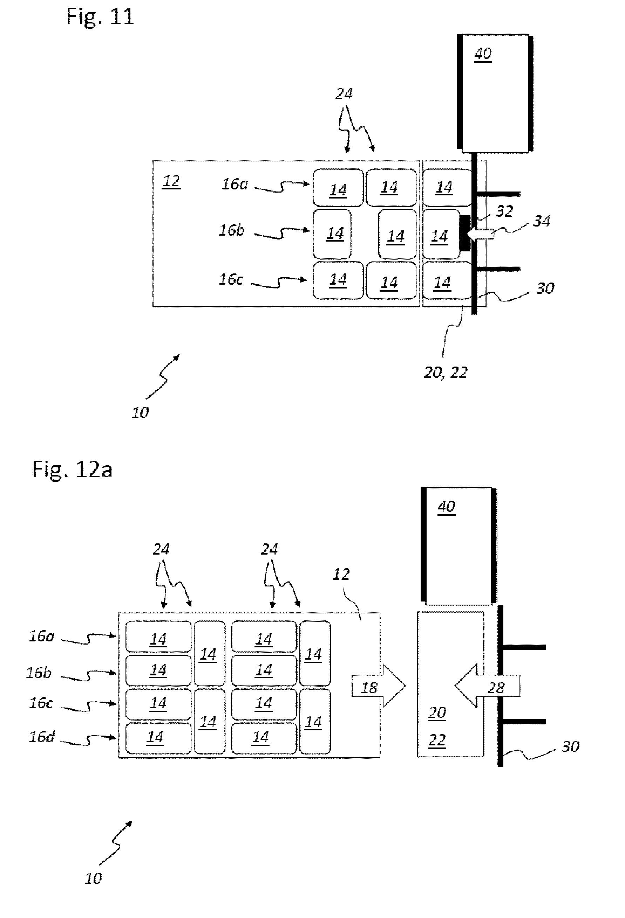

Figuren 12a bis 12k zeigen in mehreren schematischen Darstellungen aufeinander folgende Förder- und Ausrichtungsschritte für Gebinde, Stückgüter oder Artikel gemäß einer alternativen Variante des erfindungsgemäßen Verfahrens zur Umlenkung und Ausrichtung von Stückgütern, Artikeln und/oder Gruppen von Artikeln oder Stückgütern.

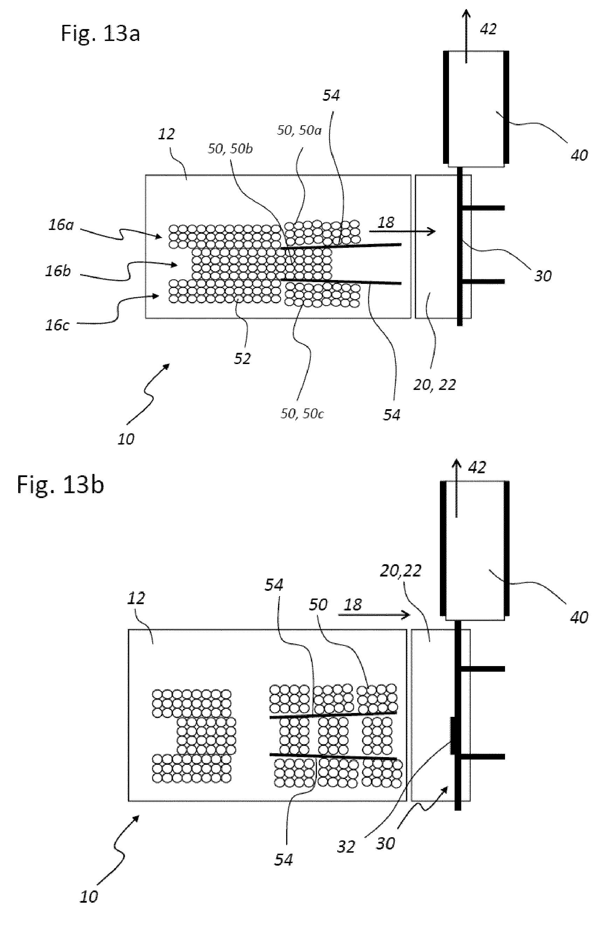

Figuren 13a bis 13f zeigen in mehreren schematischen Darstellungen aufeinander folgende Förder- und Ausrichtungsschritte für Gebinde, Stückgüter oder Artikel gemäß einer weiteren Variante des erfindungsgemäßen Verfahrens zur Umlenkung und Ausrichtung von Stückgütern, Artikeln und/oder Gruppen von Artikeln oder Stückgütern.

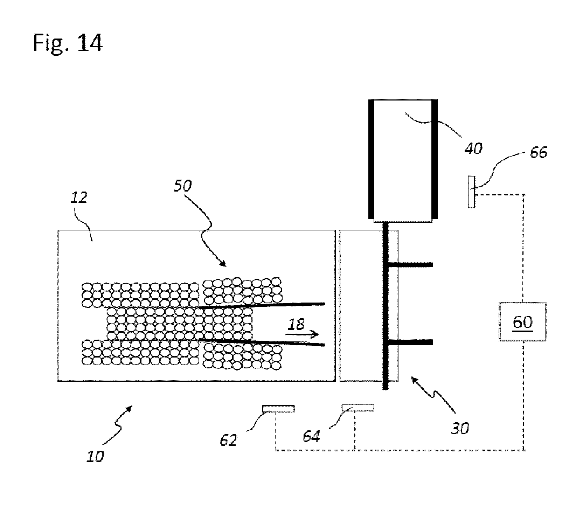

Fig. 14 zeigt in schematischer Darstellung die Funktionsweise eines Zusammenhangs zwischen Erfassungseinrichtungen und einer Steuerungseinheit, wie sie im erfindungsgemäßen Verfahren und in einer erfindungsgemäßen Vorrichtung Verwendung finden kann.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Artikelflusssystem bzw. das erfindungsgemäße Verfahren ausgestaltet sein können und stellen keine abschließende Begrenzung dar.

Die schematischen Darstellungen der Figuren 1 bis 11 verdeutlichen in mehreren aufeinander folgenden Phasen die wesentlichen Verfahrensschritte einer ersten Variante des erfindungsgemäßen Verfahrens zur Umlenkung und Ausrichtung von Stückgütern, Artikeln und/oder Gruppen von Artikeln oder Stückgütern. Das Verfahren wird bspw. mit einer Vorrichtung 10 zur Förderung, zur Umlenkung und Ausrichtung von Stückgütern, Artikeln und/oder Gruppen von Artikeln oder Stückgütern durchgeführt, wie sie in den Figuren 1 bis 14 in ihren wesentlichen Funktionselementen, die in der nachfolgend beschriebenen Weise zusammenwirken, verdeutlicht ist.

Die Vorrichtung 10 umfasst eine erste Horizontalfördereinrichtung 12, die einer Förderung der Stückgüter, Gebinde, Pakete oder Artikel 14 - nachfolgend allgemein als Artikel 14 bezeichnet - in insgesamt drei parallelen Reihen 16a, 16b und 16c von mehr oder weniger voneinander beabstandeten Artikeln 14 in einer ersten Förderrichtung 18 zu einer als zweite Horizontalfördereinrichtung 20 ausgebildeten und zwischen zwei Positionen parallel zur ersten Förderrichtung 18 beweglichen Übergabe- und Ausrichteinheit 22 dient. Wie die Fig. 1 verdeutlicht, werden auf der ersten Horizontalfördereinrichtung 12 im gezeigten Ausführungsbeispiel jeweils aufeinander folgend Palettenlagen 24 von insgesamt sechs quaderförmigen, d.h. nicht quadratischen Artikeln 14 befördert, die teilweise unterschiedlich ausgerichtet sind. So werden die äußeren Artikel 14 der randseitigen Reihen 16a und 16c jeweils in Längsrichtung in die erste Förderrichtung 18 befördert, während die beiden innen liegenden Artikel 14 der mittleren Reihe 16b quer dazu orientiert sind. Zwar ist der äußere Umfang der Palettenlagen 24 jeweils regelmäßig, doch weisen die beiden innen liegenden Artikel 14 der mittleren Reihe 16b einen relativ großen Abstand voneinander auf. Eine solche Palettenlage 24 wird auch als Kaminlage bezeichnet, weil der innen im Zentrum der Palettenlage 24 gebildete Zwischenraum zwischen den Artikeln 14 einem Kamin 26 ähnelt.

In der Darstellung der Fig. 1 ist die zweite Horizontalfördereinrichtung 20 bzw. die Übergabe- und Ausrichteinheit 22 in einer von der vorderen Kante der ersten Horizontalfördereinrichtung 12 entfernten Position angeordnet, was nachfolgend als zweite Position oder als zweite Anschlagposition bezeichnet wird. Der Pfeil 28 verdeutlicht eine Rückbewegung der Übergabe- und Ausrichteinheit 22 entgegen der ersten Förderrichtung 18 in Richtung zur ersten Horizontalfördereinrichtung 12, durch welche die Übergabe- und Ausrichteinheit 22 gemäß Fig. 2 in die erste Position bzw. ihre erste Anschlagposition gebracht wird, in der die Lücke zwischen der ersten Horizontalfördereinrichtung 12 und der zweiten Horizontalfördereinrichtung 20 minimal wird bzw. ist.

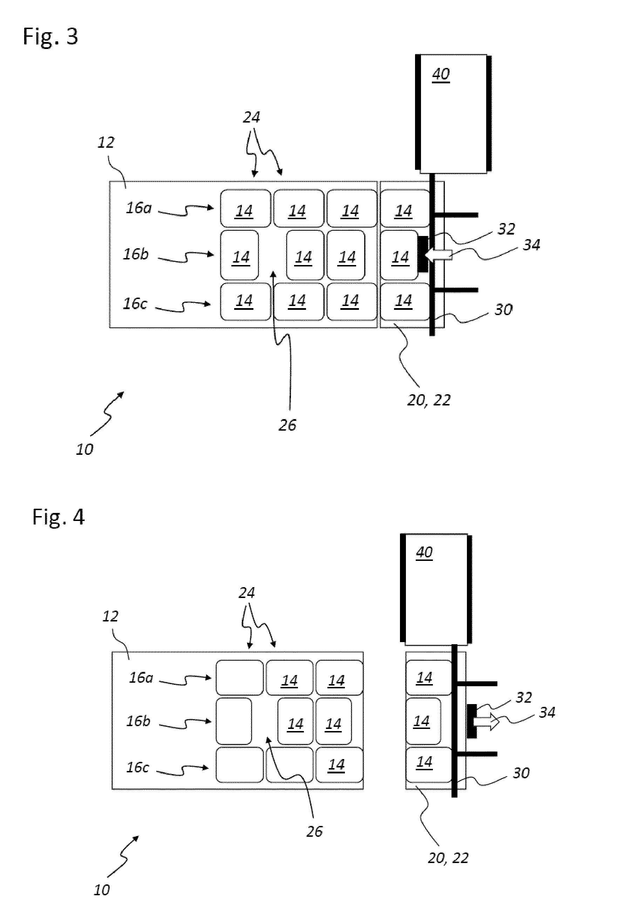

Die Darstellung der Fig. 3 verdeutlicht die Überführung der drei nebeneinander beförderten zuvorderst stehenden Artikel 14 von der ersten Horizontalfördereinrichtung 12 auf die zweite Horizontalfördereinrichtung 20. Dabei werden die Artikel 14 gegen eine mehrteilig ausgebildete und parallel zur ersten Förderrichtung 18 bewegliche Anschlageinrichtung 30 zur rückseitig bündigen Ausrichtung der Artikel 14 befördert. Die Anschlageinrichtung 30 weist ein zusätzliches Positionierungselement 32 auf, das ebenfalls parallel zur ersten Förderrichtung 18 beweglich gelagert ist. Wahlweise kann das Positionierungselement 32 an der als Querstange oder als Anschlagblech o. dgl. ausgebildeten Anschlageinrichtung 30 oder unabhängig von dieser gelagert sein. In dem in Fig. 3 gezeigten Prozessschritt ist das Positionierungselement 32 in Pfeilrichtung 34 entgegen der ersten Förderrichtung 18 nach links verschoben und ragt dadurch aus der Oberfläche der ein Widerlager für die Artikel 14 bildenden Anschlageinrichtung 30. Das Positionierungselement 32 muss für eine rückseitig fluchtende Ausrichtung der Artikel 14 entsprechend Fig. 3 die Oberfläche der Anschlageinrichtung 30 zumindest so weit überragen, dass der mittlere Artikel 14 der vordersten Querreihe mit seiner hinteren Längsseite mit den Schmalseiten der beiden benachbarten Artikel 14 fluchtet.

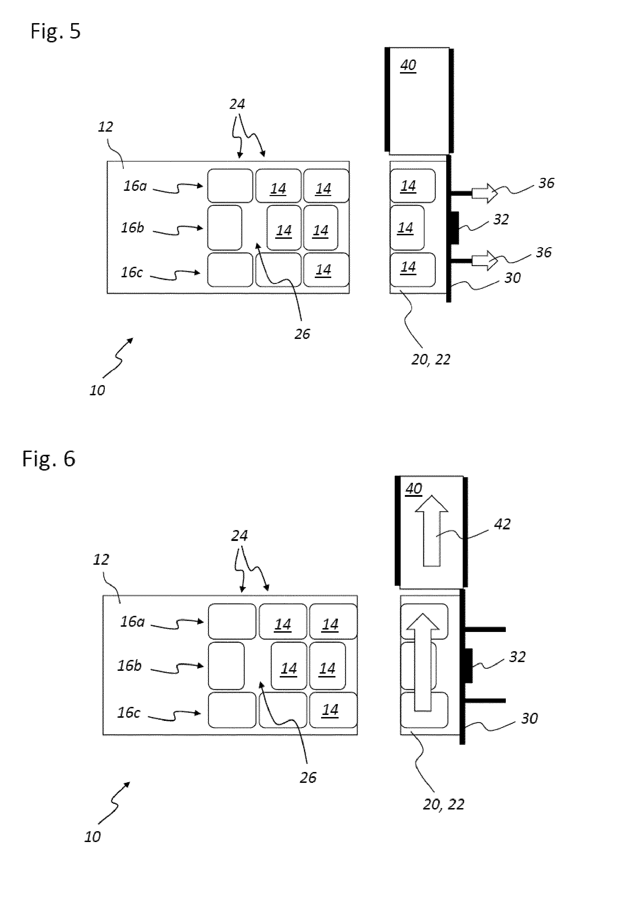

Wie durch den in Fig. 3 fehlenden Pfeil 18 verdeutlicht wird, wurde die erste Horizontalfördereinrichtung 12 zwischenzeitlich angehalten, da bei der in seiner ersten Position befindlichen zweiten Horizontalfördereinrichtung 20 und der in Position gebrachten Anschlageinrichtung 30 mit dem ausgefahrenen Positionierungselement 32 keine weitere Artikelförderung möglich ist. Nach dem Überschub der vordersten Querreihe der Artikel 14 gemäß Fig. 3 auf die Übergabe- und Ausrichteinheit 22 wird diese mitsamt der Anschlageinrichtung 30 in Pfeilrichtung 36 (vgl. Fig. 5) und dem Positionierungselement 32 in Pfeilrichtung 38 (vgl. Fig. 4) in paralleler Richtung zur ersten Förderrichtung 18 in die zweite Position bzw. Anschlagposition gebracht, bei der sich die zweite Horizontalfördereinrichtung 20 in weitgehend fluchtender Position mit einer dritten Horizontalfördereinrichtung 40 zur Weiterförderung der linksbündig ausgerichteten Artikel 14 in eine zweite Förderrichtung 42 (vgl. Fig. 6), die senkrecht zur ersten Förderrichtung 18 orientiert ist.

Die Darstellung der Fig. 6 verdeutlicht die Weiterbewegung der drei zunächst auf der Übergabe- und Ausrichteinheit 22 befindlichen Artikel 14 nach oben in die zweite Förderrichtung 42, wobei die Artikel 14 nacheinander in linksbündiger Ausrichtung auf die dritte Horizontalfördereinrichtung 40 übergeben (vgl. Fig. 7) und von dieser weiter transportiert werden (vgl. Fig. 8). Nach der vollständigen Übergabe der Artikel 14 auf die dritte Horizontalfördereinrichtung 40 kann die Übergabe- und Ausrichteinheit 22 mit abgeschalteter zweiter Horizontalfördereinrichtung 20 in Pfeilrichtung 44 entgegen der ersten Förderrichtung 18 zur ersten Horizontalfördereinrichtung 12 zurückbewegt werden (vgl. Fig. 9). Gleichzeitig werden auch die Anschlageinrichtung 30 (in Pfeilrichtung 46) und das Positionierungselement 32 (in Pfeilrichtung 48) in dieselbe Richtung bewegt. Dies kann bspw. in gekoppelter Bewegungsführung mit der Übergabe- und Ausrichteinheit 22 erfolgen.

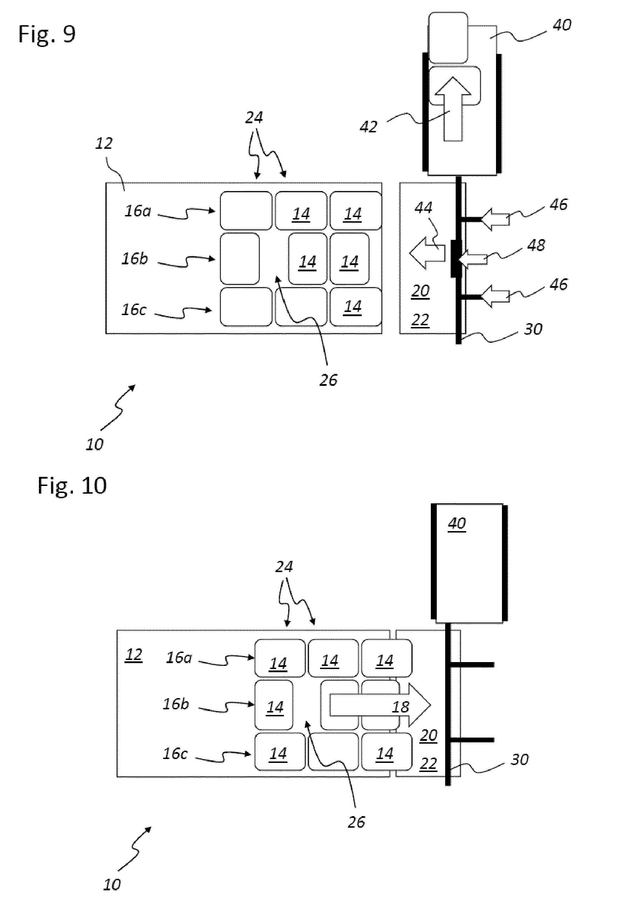

Anschließend wiederholt sich der in den Figuren 1 bis 9 gezeigte Überführungsvorgang, wobei die gemäß Fig. 10 gezeigte Querreihe mit Artikeln 14 bereits rückseitig bündig ausgerichtet ist, so dass die gemäß Fig. 11 gezeigte Blockierung des mittleren Artikels 14 mit dem entsprechend Pfeilrichtung 34 ausgefahrenen Positionierungselement 32 nicht unbedingt notwendig ist. Allerdings kann diese Positionierung des Elements 32 eine Sicherheitsmaßnahme darstellen, falls der mittlere Artikel 14 bspw. von seinen benachbarten Artikeln 14 mitgezogen würde.

Die schematischen Darstellungen der Figuren 12a bis 12k zeigen aufeinander folgende Förder- und Ausrichtungsschritte für Gebinde, Stückgüter oder Artikel 14 gemäß einer alternativen Variante des erfindungsgemäßen Verfahrens zur Umlenkung und Ausrichtung von Stückgütern, Artikeln 14 bzw. Palettenlagen 24 mit Artikeln 14. Die Vorrichtung 10 umfasst eine erste Horizontalfördereinrichtung 12, die einer Förderung der Artikel 14 in maximal vier parallelen Reihen 16a, 16b, 16c und 16d von mehr oder weniger voneinander beabstandeten Artikeln 14 in einer ersten Förderrichtung 18 zu einer als zweite Horizontalfördereinrichtung 20 ausgebildeten und zwischen zwei Positionen parallel zur ersten Förderrichtung 18 beweglichen Übergabe- und Ausrichteinheit 22 dient.

Wie die Fig. 12a verdeutlicht, werden auf der ersten Horizontalfördereinrichtung 12 im gezeigten Ausführungsbeispiel jeweils aufeinander folgende Palettenlagen 24 von insgesamt sechs quaderförmigen, d.h. nicht quadratischen Artikeln 14 befördert, die teilweise unterschiedlich ausgerichtet sind. So werden in der vordersten Querreihe zwei Artikel 14 nebeneinander befördert, deren Längsseiten jeweils quer und deren Schmalseiten parallel zur ersten Förderrichtung 18 ausgerichtet sind. Auf diese beiden Artikel 14 folgen insgesamt vier Artikel 14, die um 90°gedreht ausgerichtet sind, so dass sie mit ihren Längsseiten aneinander gereiht in insgesamt vier parallelen Reihen 16a, 16b, 16c und 16d in die Förderrichtung 18 befördert werden. Diese insgesamt sechs Artikel 14 bilden eine Palettenlage 24. Wie die Figuren 12a bis 12k verdeutlichen, werden mehrere dieser Palettenlagen 24 nacheinander befördert. Auf diese Weise sind jeweils annähernd quadratische Palettenlagen 24 ohne die in den Figuren 1 bis 11 vorhandenen Kamine 26 in der Mitte gebildet.

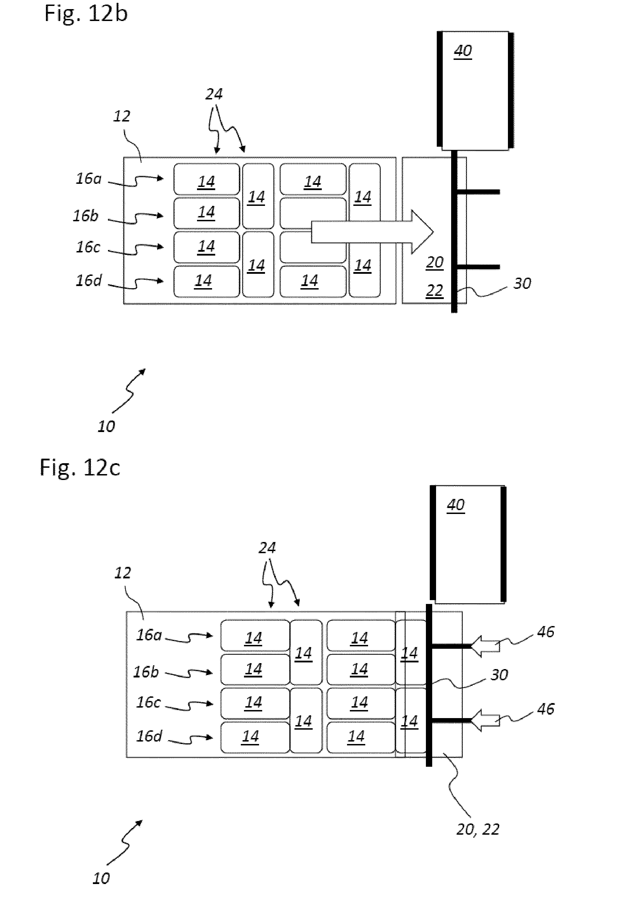

In der Darstellung der Fig. 12a ist die zweite Horizontalfördereinrichtung 20 bzw. die Übergabe- und Ausrichteinheit 22 in einer von der vorderen Kante der ersten Horizontalfördereinrichtung 12 entfernten Position angeordnet, was als zweite Position bzw. als zweite Anschlagposition bezeichnet ist. Der Pfeil 28 verdeutlicht eine Rückbewegung der Übergabe- und Ausrichteinheit 22 entgegen der ersten Förderrichtung 18 in Richtung zur ersten Horizontalfördereinrichtung 12, durch welche die Übergabe- und Ausrichteinheit 22 gemäß Fig. 12b in die erste Position bzw. ihre erste Anschlagposition gebracht wird, in der die Lücke zwischen der ersten Horizontalfördereinrichtung 12 und der zweiten Horizontalfördereinrichtung 20 minimal wird bzw. ist.

Die Darstellung der Fig. 12c verdeutlicht die Überführung der beiden nebeneinander beförderten zuvorderst stehenden Artikel 14 von der ersten Horizontalfördereinrichtung 12 auf die zweite Horizontalfördereinrichtung 20. Dabei werden die Artikel 14 gegen die einteilig ausgebildete und parallel zur ersten Förderrichtung 18 bewegliche Anschlageinrichtung 30 zur vorder- und rückseitig bündigen Ausrichtung der Artikel 14 befördert. Wie durch den in Fig. 12c fehlenden Pfeil 18 verdeutlicht ist, fördert die erste Horizontalfördereinrichtung 12 keine Artikel 14 mehr, sondern wurde zwischenzeitlich angehalten, da bei der in seiner ersten Position befindlichen zweiten Horizontalfördereinrichtung 20 und der in Position gebrachten Anschlageinrichtung 30 keine weitere Artikelförderung möglich ist.

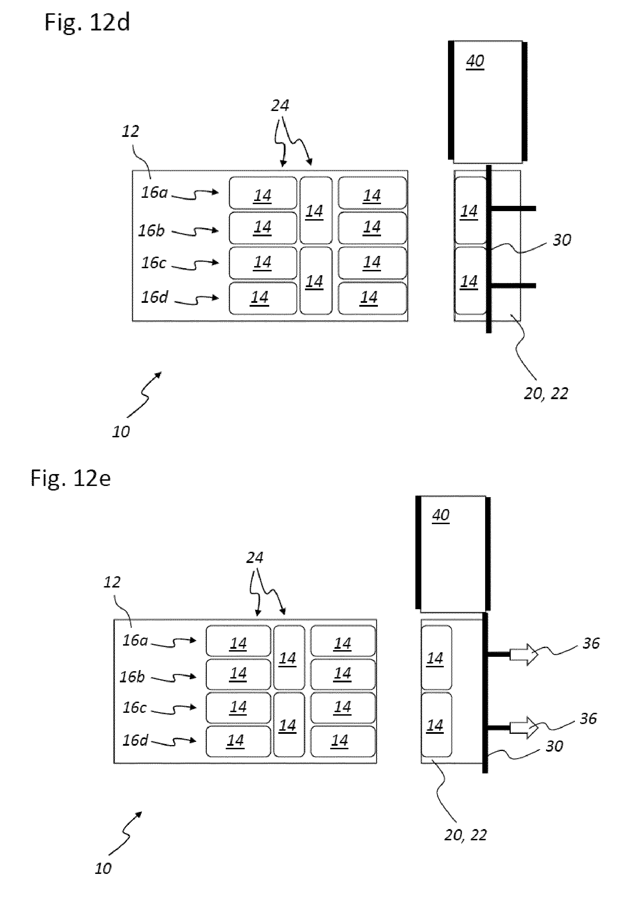

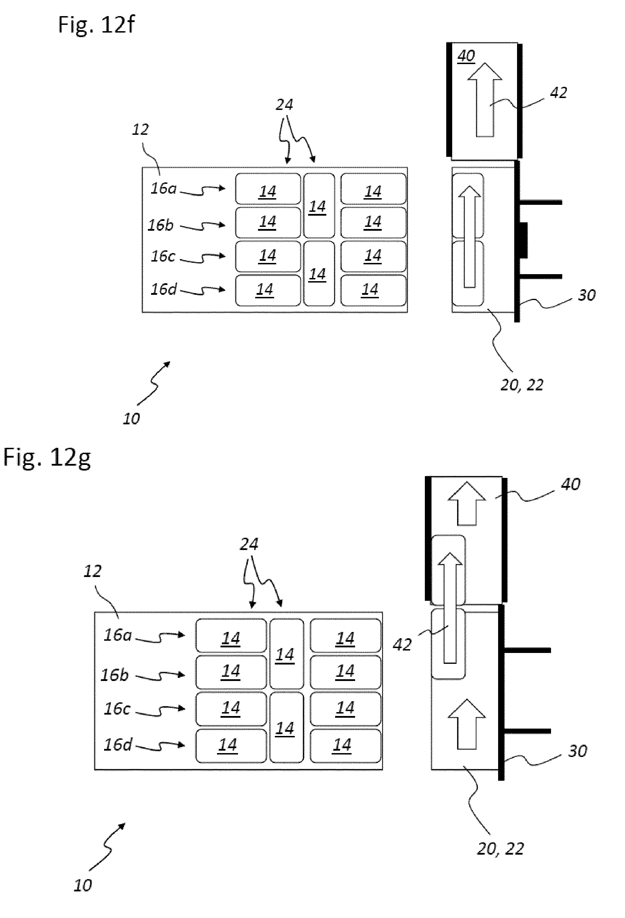

Nach der Überführung der vordersten Querreihe der Artikel 14 gemäß Fig. 12c auf die Übergabe- und Ausrichteinheit 22 wird diese mitsamt der Anschlageinrichtung 30 in Pfeilrichtung 36 (vgl. Fig. 12d und Fig. 12e) in paralleler Richtung zur ersten Förderrichtung 18 in die zweite Position bzw. Anschlagposition gebracht, bei der sich die zweite Horizontalfördereinrichtung 20 in weitgehend fluchtender Position mit einer dritten Horizontalfördereinrichtung 40 zur Weiterförderung der bündig ausgerichteten Artikel 14 in eine zweite Förderrichtung 42 (vgl. Fig. 12f), die senkrecht zur ersten Förderrichtung 18 orientiert ist.

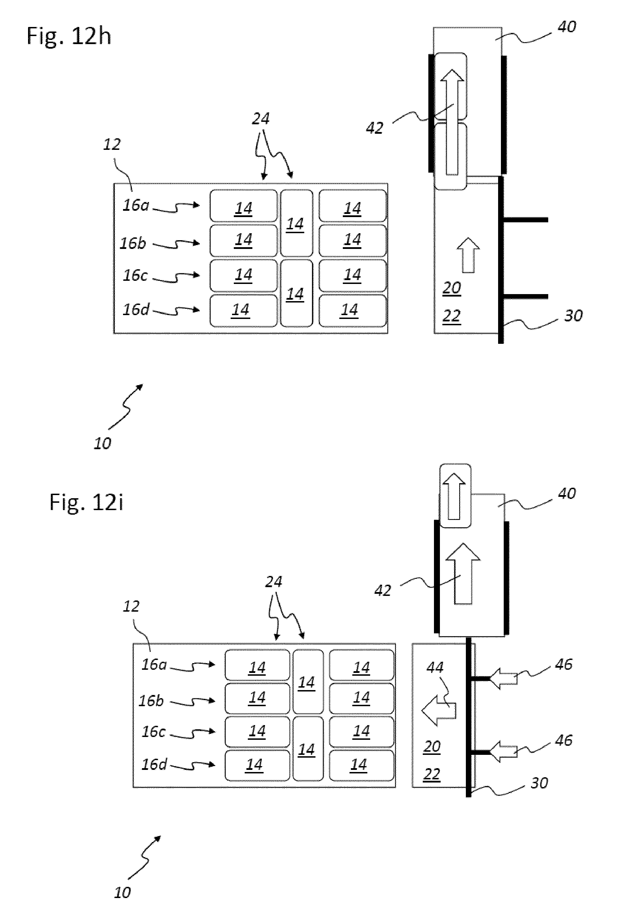

Die Darstellung der Fig. 12f verdeutlicht die Weiterbewegung der beiden zunächst auf der Übergabe- und Ausrichteinheit 22 befindlichen Artikel 14 nach oben in die zweite Förderrichtung 42, wobei die Artikel 14 nacheinander in linksbündiger Ausrichtung auf die dritte Horizontalfördereinrichtung 40 übergeben (vgl. Fig. 12g) und von dieser weiter transportiert werden (vgl. Fig. 12h). Nach der vollständigen Übergabe der Artikel 14 auf die dritte Horizontalfördereinrichtung 40 kann die Übergabe- und Ausrichteinheit 22 mit abgeschalteter zweiter Horizontalfördereinrichtung 20 in Pfeilrichtung 44 entgegen der ersten Förderrichtung 18 zur ersten Horizontalfördereinrichtung 12 zurückbewegt werden (vgl. Fig. 12i). Gleichzeitig wird auch die Anschlageinrichtung 30 (in Pfeilrichtung 46) in dieselbe Richtung bewegt. Dies kann bspw. in gekoppelter Bewegungsführung mit der Übergabe- und Ausrichteinheit 22 erfolgen.

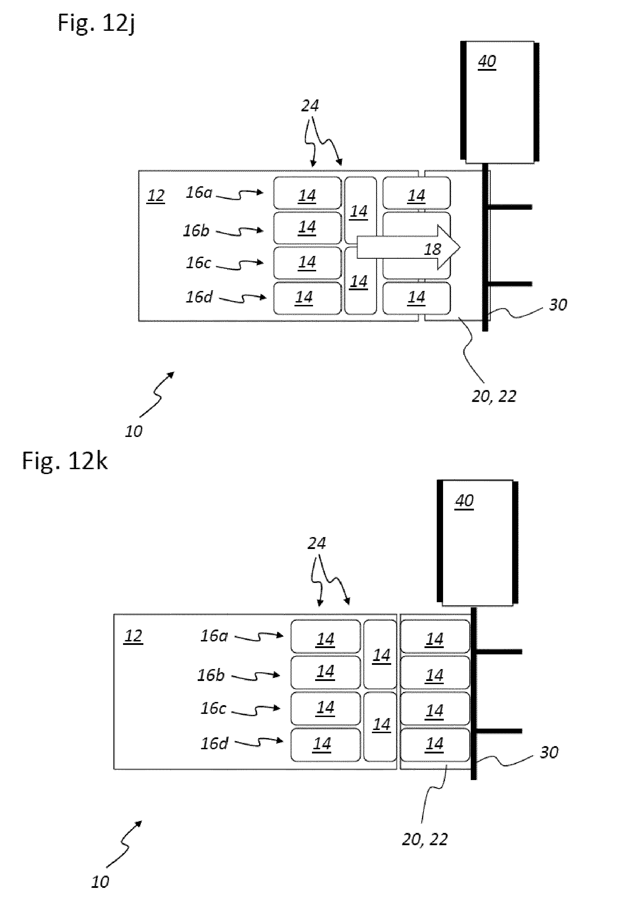

Anschließend wiederholt sich der in den Figuren 12a bis 12i gezeigte Überführungsvorgang für die Artikel, wobei die gemäß Fig. 12j gezeigte Querreihe mit vier Artikeln 14 bereits bündig ausgerichtet ist, so dass sie gemäß Fig. 12k in vier Reihen 16a, 16b, 16c und 16d auf die Übergabe- und Ausrichteinheit 22 überführt werden können.

Die schematischen Darstellungen der Figuren 13a bis 13f zeigen aufeinander folgende Förder- und Ausrichtungsschritte für Gebinde, Stückgüter oder Artikel gemäß einer weiteren alternativen Variante des erfindungsgemäßen Verfahrens. Auch die hier gezeigte Vorrichtung 10 umfasst wiederum eine erste Horizontalfördereinrichtung 12, eine zweite Horizontalfördereinrichtung 20 sowie eine dritte Horizontalfördereinrichtung 40, die in der nachfolgend beschriebenen Weise zusammenwirken, um Gebinde 50 zu befördern, die bspw. nach einer Depalettierung und Übergabe in Palettenlagen 24 auf der ersten Horizontalfördereinrichtung 12 in die erste Förderrichtung 18 transportiert werden. Auch hier werden die Gebinde 50 in insgesamt drei parallelen Reihen 16a, 16b und 16c in der ersten Förderrichtung 18 zur zweiten Horizontalfördereinrichtung 20 befördert, die zwischen zwei Positionen parallel zur ersten Förderrichtung 18 beweglich ist und als Übergabe- und Ausrichteinheit 22 fungiert.

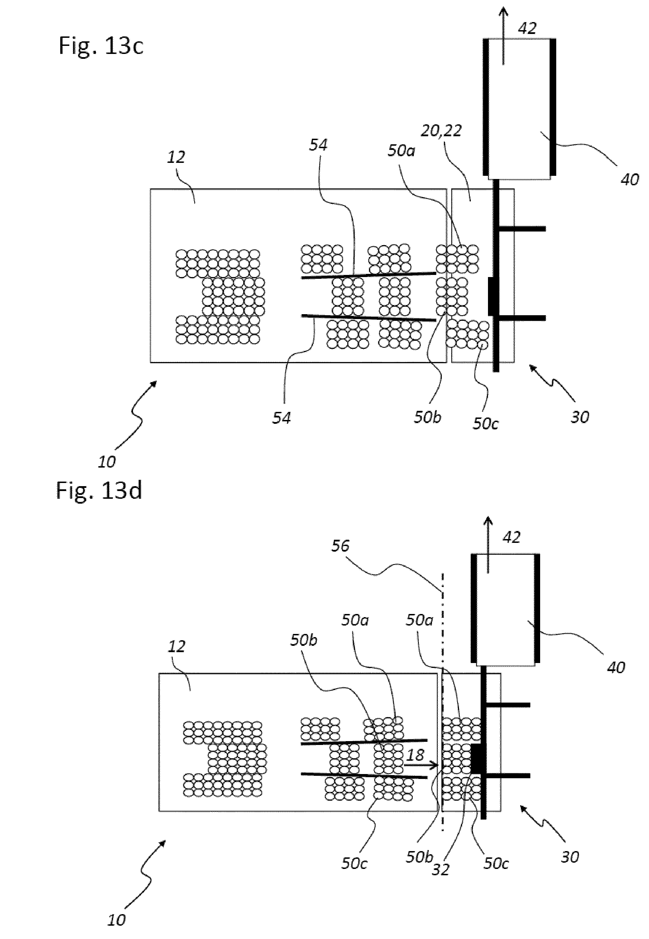

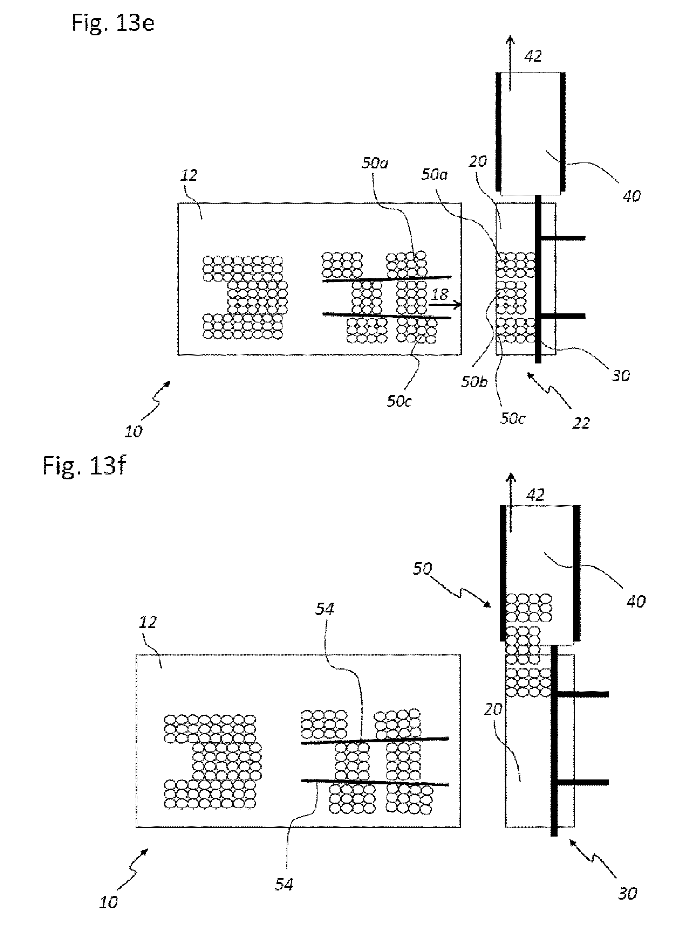

Wie die Fig. 13a verdeutlicht, werden auf der ersten Horizontalfördereinrichtung 12 im gezeigten Ausführungsbeispiel jeweils aufeinander folgend Palettenlagen 24 von insgesamt sechs quaderförmigen, d.h. nicht quadratischen Gebinden 50 befördert, die teilweise unterschiedlich ausgerichtet sind. So werden die äußeren Artikel 50a und 50c der randseitigen Reihen 16a und 16c jeweils in Längsrichtung in die erste Förderrichtung 18 befördert, während die beiden innen liegenden Gebinde 50b der mittleren Reihe 16b quer dazu orientiert sind. Zwar ist der äußere Umfang der Palettenlagen 24 jeweils regelmäßig, doch weisen die beiden innen liegenden Gebinde 50b der mittleren Reihe 16b einen relativ großen Abstand bzw. unterschiedliche Abstände voneinander auf. Der innen im Zentrum der Palettenlage 24 gebildete Zwischenraum zwischen den Gebinden 50a, 50b und 50c wird auch in Fig. 13 allgemein als Kamin 26 bezeichnet. Wie zudem in den Darstellungen der Fig. 13 erkennbar ist, umfasst jedes der Gebinde 50 insgesamt zwölf runde oder zylindrische Behälter 52, was bspw. Getränkebehälter, Dosen o. dgl. sein können.

Gegenüber der in den Figuren 1 bis 11 gezeigten Variante sind bei der in den Figuren 13 gezeigten zweiten Variante der Vorrichtung 10 zwei im Bereich der ersten Horizontalfördereinrichtung 12 angeordnete und in Transportrichtung 18 V-förmig auseinander strebende Führungselemente 54 erkennbar, welche die Gebinde 50 in definierte Bahnen lenken und in Querrichtung leicht voneinander beabstanden sollen, wie dies in den folgenden Figuren erkennbar ist. Mittels der beiden Führungselemente 54 werden die Gebinde 50a der obersten Reihe 16a sowie die Gebinde 50c der unteren Reihe 16c jeweils leicht von der mittleren Reihe 16b mit den unabgelenkten Gebinden 50b zur Ausbildung gewünschter Abstände in der zweiten Transportrichtung 42 auseinander gelenkt.

In der Darstellung der Fig. 13a ist die zweite Horizontalfördereinrichtung 20 bzw. die Übergabe- und Ausrichteinheit 22 bereits in einer an der vorderen Kante der ersten Horizontalfördereinrichtung 12 anliegenden Position angeordnet, was im vorliegenden Zusammenhang als erste Position oder als erste Anschlagposition der zweiten Horizontalfördereinrichtung 20 bezeichnet wird. Hierbei ist eine Lücke zwischen der ersten Horizontalfördereinrichtung 12 und der zweiten Horizontalfördereinrichtung 20 minimiert, wodurch eine reibungslose Übergabe der zuvorderst beförderten Querreihe von Gebinden 50 bzw. 50a, 50b und 50c ermöglicht ist. Die Darstellung der Fig. 13b verdeutlicht die weitere Förderung der Gebinde 50 auf der ersten Horizontalfördereinrichtung 12 und ihre Annäherung an die zweite Horizontalfördereinrichtung 20. Zudem ist hier die beginnende Zustellbewegung der Anschlageinrichtung 30 sowie des aus deren Oberfläche ragenden Positionierungselementes 32 in Pfeilrichtung 34 verdeutlicht.

Die Darstellung der Fig. 13c verdeutlicht den Überschub der drei nebeneinander beförderten zuvorderst stehenden Gebinde 50a, 50b und 50c von der ersten Horizontalfördereinrichtung 12 auf die zweite Horizontalfördereinrichtung 20. Dabei werden die Gebinde 50 entsprechend Fig. 13d gegen eine mehrteilig ausgebildete und parallel zur ersten Förderrichtung 18 bewegliche Anschlageinrichtung 30 zur rückseitig bündige bzw. für den Weitertransport in die zweite Förderrichtung 42 linksbündigen Ausrichtung 56 der Gebinde 50 befördert. Die Anschlageinrichtung 30 ist wiederum mit dem zusätzlichen Positionierungselement 32 versehen, das ebenfalls parallel zur ersten Förderrichtung 18 beweglich gelagert ist.

In dem in Fig. 13d gezeigten Prozessschritt ist das Positionierungselement 32 entgegen der ersten Förderrichtung 18 nach links verschoben und ragt dadurch aus der Oberfläche der ein Widerlager für die Gebinde 50 bildenden Anschlageinrichtung 30. Das Positionierungselement 32 muss für eine rückseitig fluchtende Ausrichtung 56 der Gebinde 50 entsprechend Fig. 13d die Oberfläche der Anschlageinrichtung 30 zumindest so weit überragen, dass das mittlere Gebinde 50b der vordersten Querreihe mit seiner hinteren Längsseite mit den Schmalseiten der beiden benachbarten Gebinde 50a und 50c fluchtet.

Wie durch den in den Figuren 13c, 13d und 13e fehlenden Pfeil 18 verdeutlicht ist, wurde die erste Horizontalfördereinrichtung 12 zwischenzeitlich angehalten, da bei der in seiner ersten Position befindlichen zweiten Horizontalfördereinrichtung 20 und der in Position gebrachten Anschlageinrichtung 30 mit dem ausgefahrenen Positionierungselement 32 keine weitere Gebindeförderung möglich ist. Nach dem Überschub der vordersten Querreihe der Gebinde 50 gemäß Fig. 13d auf die Übergabe-und Ausrichteinheit 22 wird diese mitsamt der Anschlageinrichtung 30 in die zweite Position verschoben (vgl. Fig. 13e), wobei auch das Positionierungselement 32 aus dem Eingriff mit dem mittleren Gebinde 50b gebracht sein muss, da es ansonsten das dritte Gebinde 50c blockieren würde, wenn die Gebinde 50 entsprechend Fig. 13f in die zweite Förderrichtung 42 transportiert werden.

Die Darstellung der Fig. 13f verdeutlicht zudem die Weiterbewegung der drei zunächst auf der Übergabe- und Ausrichteinheit 22 befindlichen Gebinde 50 nach oben in die zweite Förderrichtung 42, wobei die Gebinde 50 nacheinander in linksbündiger Ausrichtung 56 auf die dritte Horizontalfördereinrichtung 40 übergeben und von dieser weiter transportiert werden. Nach der vollständigen Übergabe der Gebinde 50 auf die dritte Horizontalfördereinrichtung 40 kann die Übergabe- und Ausrichteinheit 22 mit abgeschalteter zweiter Horizontalfördereinrichtung 20 wieder entgegen der ersten Förderrichtung 18 zur ersten Horizontalfördereinrichtung 12 zurückbewegt werden (hier nicht dargestellt). Gleichzeitig werden auch die Anschlageinrichtung 30 und das Positionierungselement 32 in dieselbe Richtung bewegt. Dies kann bspw. in gekoppelter Bewegungsführung mit der Übergabe- und Ausrichteinheit 22 erfolgen. Anschließend wiederholt sich der in den Figuren 13a bis 13f gezeigte Überführungsvorgang.

Die schematische Darstellung der Fig. 14 verdeutlicht die Funktionsweise einer optional zu verstehenden, jedoch zur Erzielung der gewünschten exakten Steuerung der verschiedenen Komponenten der Vorrichtung 10 sehr sinnvolle Steuerungseinheit 60. Die Steuerungseinheit 60 wertet die Signale mehrerer Erfassungseinrichtungen 62, 64 und 66 aus, die bspw. jeweils durch optische Sensoren gebildet sein können, welche die Bewegungen der Gebinde 50 bzw. Palettenlagen 24 erfassen und in Abhängigkeit von den Förderprozessschritten die Transportbänder 12, 20 und 40 steuern. Die erste Erfassungseinrichtung 62 bzw. der erste Sensor ist dem ersten Transportband bzw. der ersten Horizontalfördereinrichtung 12 zugeordnet und kann bspw. für das rechtzeitige Abschalten derselben sorgen, sobald nachgeförderte Gebinde 50 an der vorderen Kante angelangt sind.

Die zweite Erfassungseinrichtung 64 kann bspw. der Übergabe- und Ausrichteinheit 22 der zweiten Horizontalfördereinrichtung 20 zugeordnet sein und dort erkennen, sobald eine Querreihe von Gebinden 50 vollständig übergeschoben sind. Das erste Transportband 12 wird in Abhängigkeit von den Sensordaten des ersten Sensors 62 und/oder des zweiten Sensors 64 mittels der Steuereinheit 60 gestoppt, wonach die Übergabe- und Ausrichteinheit 22 in Transportrichtung 18 in seine zweite Anschlagposition gebracht werden kann. Der zweite Sensor bzw. die dritte Erfassungseinrichtung 64 erkennt, wenn die Gebinde 50 vollständig auf das dritte Transportband bzw. auf die dritte Horizontalfördereinrichtung 40 überführt sind, so dass die Steuerungseinheit 60 in geeigneter Weise den Förder-, Umlenk- und Überschubprozess erneut steuern kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Vorrichtung zur Förderung, zur Umlenkung und Ausrichtung von Stückgütern, Artikeln etc.
- 12: erste Horizontalfördereinrichtung
- 14: Artikel
- 16a: erste Reihe
- 16b: zweite Reihe
- 16c: dritte Reihe
- 16d: vierte Reihe
- 18: erste Förderrichtung
- 20: zweite Horizontalfördereinrichtung
- 22: Übergabe- und Ausrichteinheit
- 24: Palettenlage
- 26: Kamin
- 28: Rückbewegung, Zustellbewegung
- 30: Anschlageinrichtung
- 32: Positionierungselement
- 34: Pfeilrichtung, Zustellbewegung (Positionierungselement)
- 36: Pfeilrichtung, Rückzugsbewegung (Anschlageinrichtung)
- 38: Pfeilrichtung, Rückzugsbewegung (Positionierungselement)
- 40: dritte Horizontalfördereinrichtung
- 42: zweite Förderrichtung
- 44: Pfeilrichtung, Zustellbewegung (Übergabe- und Ausrichteinheit)
- 46: Pfeilrichtung, Zustellbewegung (Anschlageinrichtung)
- 48: Pfeilrichtung, Zustellbewegung (Positionierungselement)
- 50: Gebinde
- 50a: erstes Gebinde
- 50b: zweites Gebinde
- 50c: drittes Gebinde
- 52: Behälter
- 54: Führungselement
- 56: linksbündige Ausrichtung
- 60: Steuerungseinheit
- 62: erste Erfassungseinrichtung
- 64: zweite Erfassungseinrichtung
- 66: dritte Erfassungseinrichtung

## Patentansprüche

1. Verfahren zur Umlenkung und Ausrichtung von Stückgütern, Artikeln (14) und/oder Gruppen von Artikeln (14) oder Stückgütern, die in wenigstens zwei ungefähr parallelen Längsreihen (16) von annähernd lückenlos oder voneinander beabstandeten Stückgütern oder Artikeln (14) in einer ersten Förderrichtung (18) zu einer Übergabe- und Ausrichteinheit (22) bewegt werden, von der aus sie in ausgerichteter Anordnung in eine zur ersten Förderrichtung (18) ungefähr senkrechte zweite Förderrichtung (42) weiterbewegt werden, wobei die Übergabe- und Ausrichteinheit (22) zur Übergabe und Ausrichtung einer vordersten Querreihe der in wenigstens zwei Längsreihen (16) nebeneinander in die erste Förderrichtung (18) bewegten Stückgüter oder Artikel (14) mit einer in oder gegen die erste Förderrichtung (18) beweglichen, über die Breite des Artikel- oder Stückgutstroms ein- oder mehrteilig ausgebildeten Anschlageinrichtung (30) gekoppelt ist, deren wenigstens ein Teilabschnitt bei einem Überführen der vordersten Querreihe von Artikeln (14) oder Stückgüter auf die Übergabe- und Ausrichteinheit (22) in eine zur vorder- oder rückseitig bündigen Ausrichtung der vordersten Querreihe von Artikeln (14) oder Stückgütern entsprechende Positionierung oder Profilierung gebracht wird, wobei die Übergabe- und Ausrichteinheit (22) durch eine Bewegung parallel zur ersten Förderrichtung (18) in eine definierte, fluchtende Ausrichtung zur zweiten Förderrichtung (42) gebracht und die links- oder rechtsbündig ausgerichtete Artikel-oder Stückgutreihe von wenigstens zwei hintereinander angeordneten Artikeln (14) oder Stückgütern in die zweite Förderrichtung (42) weiterbewegt werden.

2. Verfahren nach Anspruch 1, bei dem die Anschlageinrichtung (30) mehrteilig ausgebildet ist, wobei die mehreren Teile gegenüber der Übergabe- und Ausrichteinheit (22) in oder gegen die erste Förderrichtung beweglich sind, und wobei die Anschlageinrichtung (30) nach der Überführung der vordersten Querreihe der Artikel (14) oder Stückgüter des Artikel- oder Stückgutstroms auf die Übergabe- und Ausrichteinheit (22) parallel zur ersten Förderrichtung (18) aus dem Eingriff mit den Artikeln (14) oder Stückgütern gebracht wird.

3. Verfahren nach Anspruch 1 oder 2, bei dem die Artikel (14) oder Stückgüter zur Bewegung in die erste Förderrichtung (18) auf einer ersten Horizontalfördereinrichtung (12) befördert und bewegt werden, die eine intermittierende Förderbewegung der in wenigstens zwei ungefähr parallelen Längsreihen (16) von annähernd lückenlos oder gering voneinander beabstandeten Stückgütern oder Artikeln (14) bewirkt, die abgestimmt ist auf die oszillierenden Bewegungen der Übergabe- und Ausrichteinheit (22) in oder gegen die erste Förderrichtung (18).

4. Verfahren nach einem der Ansprüche 1 bis 3, bei dem die Übergabe- und Ausrichteinheit (22) als zweite Horizontalfördereinrichtung (20) ausgebildet ist, die als Ganzes zwischen einer ersten Position und einer zweiten Position in oder gegen die erste Förderrichtung (18) beweglich ist, wobei die Übergabe- und Ausrichteinheit (22) in der ersten Position einen minimalen Abstand zur ersten Horizontalfördereinrichtung (12) aufweist, und wobei sie in ihrer zweiten, variablen Position eine definierbare Ausrichtung zur fluchtenden Übergabe der ausgerichteten Artikel (14) oder Stückgüter zu einer in zweiter Förderrichtung (42) gering beabstandeten dritten Horizontalfördereinrichtung (40) aufweist, durch welche die ausgerichteten Artikel (14) oder Stückgüter mittels der als zweite Horizontalfördereinrichtung (20) fungierenden Übergabe- und Ausrichteinheit (22) in der zweiten Förderrichtung (42) an die dritte Horizontalfördereinrichtung (40) übergeben werden, welche die links- oder rechtsbündig ausgerichteten Artikel (14) oder Stückgüter weitertransportiert.

5. Verfahren nach einem der Ansprüche 1 bis 4, bei dem die Artikel (14) oder Stückgüter so lange mittels der ersten Horizontalfördereinrichtung (12) in erster Förderrichtung (18) gegen die mit der sich in der ersten Position befindlichen Übergabe- und Ausrichteinheit (22) zusammenwirkende mehrteilige Anschlageinrichtung (30) bewegt werden, bis zumindest die vorderste Querreihe der Artikel (14) oder Stückgüter unter Anlage an die profilierte, mehrteilige Anschlageinrichtung (30) auf die zunächst stillstehende zweite Horizontalfördereinrichtung (20) der Übergabe- und Ausrichteinheit (22) überführt ist, wonach die erste Horizontalfördereinrichtung (12) angehalten wird.

6. Verfahren nach Anspruch 5, bei dem die Übergabe- und Ausrichteinheit (22) mit den darauf befindlichen Artikeln (14) oder Stückgütern unter Stillstand ihrer zweiten Horizontalfördereinrichtung (20) parallel zur ersten Förderrichtung (18) und ungefähr quer zur zweiten Förderrichtung (42) aus ihrer ersten Position in die definierbare zweite Position gebracht wird, wobei gleichzeitig die einzelnen Teile der ein- oder mehrteiligen Anschlageinrichtung (30) durch Verschiebung parallel zur ersten Förderrichtung (18) aus dem Eingriff mit den auf der Übergabe- und Ausrichteinheit (22) befindlichen Artikeln (14) oder Stückgütern gebracht werden.

7. Verfahren nach Anspruch 5 oder 6, bei dem die zweite Horizontalfördereinrichtung (20) der in ihre zweite Position gebrachten Übergabe- und Ausrichteinheit (22) anläuft und die darauf befindliche, links- oder rechtsbündig ausgerichtete Reihe von Artikeln (14) oder Stückgütern in die zweite Förderrichtung (42) auf die mit der Übergabe- und Ausrichteinheit (33) fluchtende, sich bewegende dritte Horizontalfördereinrichtung (40) überführt.

8. Verfahren nach einem der Ansprüche 5 bis 7, bei dem die Übergabe- und Ausrichteinheit (22) nach Überführung aller dort befindlichen Artikel (14) oder Stückgüter in die zweite Förderrichtung (42) an die dritte Horizontalfördereinrichtung (40) aus ihrer zweiten Position in die erste Position gegen die erste Förderrichtung (18) zur ersten Horizontalfördereinrichtung (12) zurückbewegt und gleichzeitig die zweite Horizontalfördereinrichtung (20) angehalten wird, wobei die ein- oder mehrteilige Anschlageinrichtung (30) gegen die erste Förderrichtung (18) in ihre ggf. profilierte Ausrichtposition zur Bildung eines Anschlags für die dagegen bewegten Artikel (14) oder Stückgüter gebracht wird, und wobei die erste Horizontalfördereinrichtung (12) für die Überführung einer weiteren Querreihe von nun zuvorderst stehenden Artikeln (14) oder Stückgütern auf die Übergabe- und Ausrichteinheit (22) gegen die Anschlageinrichtung (30) wieder anläuft.

9. Vorrichtung (10) zur Förderung, zur Umlenkung und Ausrichtung von Stückgütern, Artikeln (14) und/oder Gruppen von Artikeln (14) oder Stückgütern, mit einer ersten Horizontalfördereinrichtung (12) zur Förderung der Stückgüter oder Artikel (14) in wenigstens zwei ungefähr parallelen Längsreihen (16) von annähernd lückenlos oder voneinander beabstandeten Stückgütern oder Artikeln (14) in einer ersten Förderrichtung (18) zu einer als zweite Horizontalfördereinrichtung (20) ausgebildeten und zwischen zwei Positionen parallel zur ersten Förderrichtung (18) beweglichen Übergabe- und Ausrichteinheit (22) gegen eine einteilig oder mehrteilig ausgebildete und parallel zur ersten Förderrichtung (18) bewegliche Anschlageinrichtung (30) zur vorder- oder rückseitig bündigen Ausrichtung der Artikel (14) oder Stückgüter, und mit einer dritten Horizontalfördereinrichtung (40) zur Weiterförderung der in einer zweiten Förderrichtung (42) links- oder rechtsbündig ausgerichteten Artikel (14) oder Stückgüter in die zweite Förderrichtung (42), die ungefähr senkrecht zur ersten Förderrichtung (18) orientiert ist.

10. Vorrichtung nach Anspruch 9, bei der die Anschlageinrichtung (30) aus mehreren Teilen gebildet ist, die zur Profilierung und vorder- oder rückseitig bündigen Ausrichtung der vorderen Stirnseite der zuvorderst befindlichen Querreihe von Artikeln (14) oder Stückgütern unabhängig voneinander in oder gegen die ersten Förderrichtung (18) beweglich sind.

11. Vorrichtung nach Anspruch 9 oder 10, bei der die als zweite Horizontalfördereinrichtung (20) ausgebildete Übergabe- und Ausrichteinheit (22) als Ganzes zwischen einer ersten Position und einer zweiten Position in oder gegen die erste Förderrichtung (18) beweglich ist, wobei die Übergabe- und Ausrichteinheit (22) in der ersten Position einen minimalen Abstand zur ersten Horizontalfördereinrichtung (12) aufweist, und wobei sie in ihrer zweiten, variablen Position eine definierbare Ausrichtung zur fluchtenden Übergabe der ausgerichteten Artikel (14) oder Stückgüter zu einer in zweiter Förderrichtung (42) gering beabstandeten dritten Horizontalfördereinrichtung (40) aufweist.

12. Vorrichtung nach einem der Ansprüche 9 bis 11, bei der zumindest die erste und die zweite Horizontalfördereinrichtung (12, 20) in gegenseitiger Abstimmung und/oder in Abhängigkeit von der in erster oder zweiter Position befindlichen Übergabe- und Ausrichteinheit (22) aktivierbar oder deaktivierbar sind.

13. Vorrichtung nach einem der Ansprüche 9 bis 12, bei der zumindest der ersten Horizontalfördereinrichtung (12) Sensoreinrichtungen (62) zur Erfassung der aktuellen Positionen der darauf befindlichen und beförderten Artikel (14) oder Stückgüter zugeordnet sind.
